# EUROPEAN PATENT SPECIFICATION

(11) **EP 4 282 142 B1**
(45) Date of publication and mention of the grant of the patent: **04.03.2026**
(21) Application number: 21701797.9
(22) Date of filing: 25.01.2021
(51) Int. Cl.: H04L 45/24, H04L 45/00, H04W 40/04, H04W 40/24, H04W 40/12

(54) **APPLICATION AWARE D2D TOPOLOGY SET UP**
ANWENDUNGSBEWUSSTER D2D-TOPOLOGIEAUFBAU
ÉTABLISSEMENT DE TOPOLOGIE D2D SENSIBLE À L'APPLICATION

(43) Date of publication of application: 29.11.2023
(73) Proprietor: Telefonaktiebolaget LM Ericsson (publ), 164 83 Stockholm (SE)
(72) Inventor: BALAKRISHNAN, Bipin, 244 44 KÄVLINGE (SE); KALANTARI, Ashkan, 211 27 MALMÖ (SE); KRISTENSSON, Andreas, 247 35 SÖDRA SANDBY (SE); FODOR, Gabor, 165 52 HÄSSELBY (SE)
(74) Representative: Ericsson
(86) International application number: PCT/EP2021/051634
(87) International publication number: WO 2022/156914

(56) References cited:
- EP-A1- 3 235 295
- US-A1- 2017 156 078
- US-A1- 2020 177 498

## Description

### Technical Field

The present disclosure relates to wireless Device-to-Device (D2D) communication and, more specifically, to determining a topology for a D2D link.

### Background

Multipoint transmissions, which are sometimes referred to as joint transmissions or Cooperative Multipoint (CoMP) transmissions, are used to enhance the Signal-to-Interference-Plus-Noise Ratio (SINR) and thereby the reliability of wireless communication for critical applications. Multi-Transmission/Reception Point (TRP) solutions increase the SINR at the expense of some coordination and synchronization mechanisms that are needed to ensure that signals transmitted from multiple TRPs combine constructively at the intended receivers.

Device-to-Device (D2D) communications have been proposed to improve link quality when the communicating devices are in proximity to one another. Existing D2D protocols and algorithms facilitate unicast, multicast, and broadcast communications between devices communicating either in licensed or unlicensed spectrum. D2D communications can also be used to improve the signal quality to devices that are out of network coverage but are within the coverage of a device that is in cellular coverage.

Industrial applications such as automated guided vehicle or robot control, real-time production line control, unmanned aerial vehicle control, and mission control plan control belong to the Ultra-Reliable Low-Latency (URLLC) use case type (e.g., packet success rate of 99.99999% within End-to-End (E2E) latency of 1 millisecond (ms)) as mentioned in Third Generation Partnership Project (3GPP) Technical Specification (TS) 22.104 V16.2.0. URLLC applications are defined herein as those that need a guaranteed packet delivery within a defined latency bound. The applications that belong to the URLLC use case have varying reliability needs and latency bounds. A few examples of the varying reliability requirements among different applications can be found in 3GPP TS 22.104. In addition, URLLC applications need to co-exist with other applications that belong to the enhanced Mobile Broadband (eMBB) or massive Machine Type Communication (mMTC) use cases. Extreme high reliability with bounded latency might be difficult to meet with frequency, spatial, or temporal diversity alone but is more likely to be achieved with multi-point transmissions, as described in V. Poirot, "Energy Efficient Multi-Connectivity for ultra dense networks," Luleå University of Technology, Luleå, 2017. User Equipments (UEs) could be used as nodes in the multi-point transmission. However, there are problems that must be overcome in order to use multiple UEs as nodes of multi-point transmission poses. In particular, one problem is that there is a need for a scheme to select eligible UEs to carry out this multi-point transmission. Another problem is that there is a need for a scheme to set up a topology that serves the needs of the application. It is possible that not all UEs can participate in the multi-point transmission as some of them may not be able to function as time-bound relays. This can be due to reasons such as device architecture limitations (e.g., longer latency to switch to D2D mode), device functionality limitations (e.g., desired Radio Access Technology (RAT) such as, e.g., 3GPP New Radio (NR) is unavailable), or temporary limitations (e.g., limitations due to currently serving time-critical applications that need guarantees, low battery, etc.).

UEs located in the short and final geographical distance that must be spanned to provide cellular service are usually said to be in the "last mile" in communication parlance. Therefore, an out-of-coverage UE or an in-coverage UE with bad connection properties (e.g., bad SINR) located in the last mile needs to have a reliable connection to serve applications, such as URLLC applications, residing on these devices. The node that connects the last mile to the rest of the geographical region is called an "entry node" into the last mile. This could be, for example, a base station when connecting cloud applications to end points in the last mile.

Existing CoMP solutions use multiple base stations, which could lead to higher costs and is not efficiently scalable to address all non-coverage regions within environments such as factory floors. Some other solutions, such as the one described in United States Patent Application Publication No. 2015/0043385 A1, cover construction of a topology across multiple cells between two device pairs only. Other solutions, such as the one described in United States Patent No. 10,349,335, only address the low latency by selecting one path from source to destination, perhaps with multiple hops. Thus, solutions such as the one described in United States Patent No. 10,349,335 do not aid in enhancing reliability for data transmission as a broken link can lead to a lossy data transmission. Some other solutions, such as the one described in United States Patent Application Publication No. 2016/0295627 A1, give only a guidance as to which applications can be supported over a single link based on link parameters, where the applications are not of the URLLC use case type. In other words, solutions such as the one described in United States Patent Application Publication No. 2016/0295627 A1 do not consider reliability at bounded latency. Furthermore, one cannot know which combination of links can cater to URLLC applications.

US 2020/177498 discloses a method and an apparatus for discovering network paths for packets to be transmitted from a source node to a destination node via several intermediate nodes. US 2017/156078 a system for congestion management in a communication network where several possible paths between a source node and a destination node are established possibly using a device as an intermediate node where a QoS criterion is taken into account.

### Summary

Systems and methods are disclosed herein for determining a topology for a multi-path connection to a target wireless communication device based on one or more application-level requirements. In one embodiment, a method performed by a master topology function to determine a topology for a multi-path connection to a target wireless communication device comprises receiving a request for a topology for a multi-path connection that satisfies one or more application-level requirements of a particular application, the multi-path connection being to a target wireless communication device. The method further comprises determining a topology for the multi-path connection based on the one or more application-level requirements of the particular application. The topology comprises two or more links from a source wireless node to the target wireless communication device and at least one of the two or more links is a multi-hop link from the source wireless node to the target wireless communication device via one or more additional wireless communication devices that operate as relays. The method further comprises configuring, directly or indirectly, the source wireless node, the target wireless communication device, and the one or more additional wireless communication devices in accordance with the determined topology to provide the multi-path connection. In this manner, a topology is determined that satisfies application-level requirement(s).

In one embodiment, determining the topology comprises determining a number (Nₗᵢₙₖₛ) of links for the multi-path connection based on the one or more application-level requirements of the particular application. In one embodiment, the one or more application-level requirements comprise reliability, and determining the number (Nₗᵢₙₖₛ) of links for the multi-path connection comprises determining the number (Nₗᵢₙₖₛ) of links for the multi-path connection such that the number (Nₗᵢₙₖₛ) of links is directly related to the reliability.

In one embodiment, determining the topology further comprises obtaining a set of potential candidate wireless communication devices for the topology for the multi-path connection and performing a feasibility check for each potential candidate wireless communication device in the set of potential candidate wireless communication devices to thereby provide a set of candidate wireless communication devices. For each potential candidate wireless communication device, the feasibility check is a check of whether the potential candidate wireless communication device satisfies one or more criteria related to the one or more application-level requirements of the particular application. Determining the topology further comprises determining the topology for the multi-path connection based on the set of candidate wireless communication devices and the determined number (Nₗᵢₙₖₛ) of links for the multi-path connection. In one embodiment, the one or more criteria used for the feasibility check for each potential candidate wireless communication device in the set of potential candidate wireless communication devices comprise one or more criteria that are based on: one or more static capabilities of the potential candidate wireless communication device, one or more semi-static capabilities of the potential candidate wireless communication device, or both. In one embodiment, obtaining the set of potential candidate wireless communication devices for the topology for the multi-path connection comprises obtaining an initial set of wireless communication devices based on one or more parameters comprising a location of the target wireless communication device and filtering the initial set of wireless communication devices based on one or more filtering criteria to provide the set of potential candidate wireless communication devices. The one or more filtering criteria comprise one or more wireless communication device capabilities.

In one embodiment, performing the feasibility check for each of the set of potential candidate wireless communication devices comprises sending feasibility requests to the set of potential candidate wireless communication devices. The feasibility requests are requests for feasibility responses from the set of potential candidate wireless communication devices that indicate whether the set of potential candidate wireless communication devices satisfy the one or more criteria related to the one or more application-level requirements of the particular application. Performing the feasibility check for each of the set of potential candidate wireless communication devices further comprises receiving the feasibility responses from at least a subset of the set of potential candidate wireless communication devices and selecting the set of candidate wireless communication devices from the set of potential candidate wireless communication devices based on the received feasibility responses.

In one embodiment, the feasibility check for each potential candidate wireless communication device takes into consideration an existing workload at the potential candidate wireless communication device.

In one embodiment, determining the topology for the multi-path connection based on the set of candidate wireless communication devices and the determined number (Nₗᵢₙₖₛ) of links for the multi-path connection comprises determining a candidate topology for the multi-path connection based on the set of candidate wireless communication devices and the determined number (Nₗᵢₙₖₛ) of links for the multi-path connection. The candidate topology comprises two or more candidate links, at least one of which is a multi-hop link via at least one of the set of candidate wireless communication devices. A number of candidate links in the candidate topology is greater than or equal to the determined number (Nₗᵢₙₖₛ) of links needed for the multi-path connection. Determining the topology for the multi-path connection based on the set of candidate wireless communication devices and the determined number (Nₗᵢₙₖₛ) of links for the multi-path connection further comprises initiating a link Quality of Service (QoS) predetermination procedure for each of the two or more candidate links, receiving link QoS reports for each of the two or more candidate links, and selecting the determined number (Nₗᵢₙₖₛ) of links from among the two or more candidate links of the candidate topology as links for the topology for the multi-path connection based on the one or more application-level requirements of the particular application and the link QoS reports.

In one embodiment, the one or more application-level requirements comprise: (a) an application-level QoS for the particular application, (b) an application-level reliability required for the particular application, (c) an application-level latency requirement of the particular application, or (d) any combination to two or more of (a)-(c).

Corresponding embodiments of a network node for implementing a master topology function for determining a topology for a multi-path connection to a target wireless communication device are disclosed. In one embodiment, the network node is adapted to receive a request for a topology for a multi-path connection that satisfies one or more application-level requirements of a particular application, the multi-path connection being to a target wireless communication device. The network node is further adapted to determine a topology for the multi-path connection based on the one or more application-level requirements of the particular application. The topology comprises two or more links from a source wireless node to the target wireless communication device and at least one of the two or more links is a multi-hop link from the source wireless node to the target wireless communication device via one or more additional wireless communication devices that operate as relays. The network node is further adapted to configure the source wireless node, the target wireless communication device, and the one or more additional wireless communication devices in accordance with the determined topology to provide the multi-path connection.

In another embodiment, a network node for implementing a master topology function for determining a topology for a multi-path connection to a target wireless communication device comprises a network interface and processing circuitry associated with the network interface. The processing circuitry is configured to cause the network node to receive a request for a topology for a multi-path connection that satisfies one or more application-level requirements of a particular application, the multi-path connection being to a target wireless communication device. The processing circuitry is further configured to cause the network node to determine a topology for the multi-path connection based on the one or more application-level requirements of the particular application. The topology comprises two or more links from a source wireless node to the target wireless communication device and at least one of the two or more links is a multi-hop link from the source wireless node to the target wireless communication device via one or more additional wireless communication devices that operate as relays. The processing circuitry is further configured to cause the network node to configure the source wireless node, the target wireless communication device, and the one or more additional wireless communication devices in accordance with the determined topology to provide the multi-path connection.

Embodiments of a method performed by a wireless communication device to determine and report feasibility of the wireless communication device for serving as a node for a multi-path connection to a target wireless communication device are also disclosed. In one embodiment, the method comprises receiving a feasibility request, where the feasibility request is a request for a response that indicates whether the wireless communication device is able to serve as a node for a multi-path connection to a target wireless communication device that must satisfy one or more application-level requirements of a particular application. The method further comprises determining whether the wireless communication device is able to serve as a node for the multi-path connection to the target wireless communication device that must satisfy the one or more application-level requirements of the particular application. The method further comprises sending a feasibility response to the node, where the feasibility response comprises information that indicates whether the wireless communication device is able to serve as a node for the multi-path connection to the target wireless communication device that must satisfy the one or more application-level requirements of the particular application, in accordance with the determination.

In one embodiment, determining whether the wireless communication device is able to serve as a node for the multi-path connection to the target wireless communication device comprises determining whether the wireless communication device satisfies one or more criteria that are related to the one or more application-level requirements of the particular application. In one embodiment, the one or more criteria used for the feasibility check comprise one or more criteria that are based on: one or more static capabilities of a potential candidate wireless communication device, one or more semi-static capabilities of the potential candidate wireless communication device, or both.

In one embodiment, determining whether the wireless communication device is able to serve as a node for the multi-path connection to the target wireless communication device comprises determining whether the wireless communication device is able to serve as a node for the multi-path connection to the target wireless communication device taking into consideration a current workload of the wireless communication device.

In one embodiment, determining whether the wireless communication device is able to serve as a node for the multi-path connection to the target wireless communication device comprises determining whether the wireless communication device has a capability to serve as a relay in a multi-hop link.

In one embodiment, determining whether the wireless communication device is able to serve as a node for the multi-path connection to the target wireless communication device comprises determining whether the wireless communication device has a capability to serve as a relay in a multi-hop link for the multi-path connection that must satisfy the one or more application-level requirements of the particular application.

In one embodiment, determining whether the wireless communication device is able to serve as a node for the multi-path connection to the target wireless communication device comprises determining whether the wireless communication device has a capability to switch between a receive mode of operation and a transmit mode of operation within a defined amount of time required to satisfy the one or more application-level requirements of the particular application.

In one embodiment, the wireless communication device is determined to not be able to serve as a node for the multi-path connection to the target wireless communication device that must satisfy the one or more application-level requirements of the particular application, and the feasibility response further comprises information that indicates a reason that the wireless communication device is determined to not be able to serve as a node for the multi-path connection to the target wireless communication device that must satisfy the one or more application-level requirements of the particular application.

Corresponding embodiments of a wireless communication device are also disclosed. In one embodiment, a wireless communication device for determining and reporting feasibility of the wireless communication device for serving as a node for a multi-path connection to a target wireless communication device is adapted to receive a feasibility request from a node, where the feasibility request is a request for a response that indicates whether the wireless communication device is able to serve as a node for a multi-path connection to a target wireless communication device that must satisfy one or more application-level requirements of a particular application. The wireless communication device is further adapted to determine whether the wireless communication device is able to serve as a node for the multi-path connection to the target wireless communication device that must satisfy the one or more application-level requirements of the particular application. The wireless communication device is further adapted to send a feasibility response to the node, where the feasibility response comprises information that indicates whether the wireless communication device is able to serve as a node for the multi-path connection to the target wireless communication device that must satisfy the one or more application-level requirements of the particular application, in accordance with the determination.

In one embodiment, a wireless communication device for determining and reporting feasibility of the wireless communication device for serving as a node for a multi-path connection to a target wireless communication device comprises one or more transmitters, one or more receivers, and processing circuitry associated with the one or more transmitters and the one or more receivers. The processing circuitry is configured to cause the wireless communication device to receive a feasibility request from a node, where the feasibility request is a request for a response that indicates whether the wireless communication device is able to serve as a node for a multi-path connection to a target wireless communication device that must satisfy one or more application-level requirements of a particular application. The processing circuitry is further configured to cause the wireless communication device to determine whether the wireless communication device is able to serve as a node for the multi-path connection to the target wireless communication device that must satisfy the one or more application-level requirements of the particular application. The processing circuitry is configured to cause the wireless communication device to send a feasibility response to the node, where the feasibility response comprises information that indicates whether the wireless communication device is able to serve as a node for the multi-path connection to the target wireless communication device that must satisfy the one or more application-level requirements of the particular application, in accordance with the determination.

Embodiments of a method performed by a wireless communication device for enabling predetermination of a link QoS of a multi-hop link that includes at least one wireless communication device that operates as a relay node are also disclosed. In one embodiment, the method comprises receiving a request for QoS predetermination from a node, where the request comprises first information that indicates whether the wireless communication device is a transmitting wireless communication device for the multi-hop link, a relay node for the multi-hop link, or a target wireless communication device for the multi-hop link and second information that indicates one or more parameters for the QoS predetermination. The method further comprises extracting the first information and the second information from the request and determining whether the wireless communication device is to function as transmitting wireless communication device for the multi-hop link, a relay node for the multi-hop link, or a target wireless communication device for the multi-hop link, based on the first information. The method further comprises, if the wireless communication device is to function as a relay node or a target wireless communication device for the multi-hop link, receiving and analyzing a plurality of synthetic packet transmissions from a previous hop in the multi-hop link in accordance with the second information, obtaining one or more QoS related parameters based on results of the receiving and analyzing the plurality of synthetic packet transmissions, and sending a QoS report to the node based on the one or more QoS related parameters. The method further comprises, if the wireless communication device is to function as a relay node or a source wireless communication device for the multi-hop link, transmitting a plurality of synthetic packet transmissions to a next hop in the multi-hop link in accordance with the second information.

### Brief Description of the Drawings

The accompanying drawing figures incorporated in and forming a part of this specification illustrate several aspects of the disclosure, and together with the description serve to explain the principles of the disclosure.
Figure 1 illustrates one example of a communication system in which embodiments of the present disclosure may be implemented;
Figure 2 illustrates examples of topologies that may be determined by the master topology function of Figure 1 in accordance with embodiments of the present disclosure;
Figure 3 illustrates the operation of the communication system of Figure 1 to determine and use a multi-path connection based on application-level requirements of an application to use the multi-path connection in accordance with embodiments of the present disclosure;
Figures 4A through 4C provide a flow chart that illustrates the operation of the master topology function in more detail, in accordance with an embodiment of the present disclosure;
Figure 5 illustrates one example of the feasibility check process in accordance with an embodiment of the present disclosure;
Figure 6 is a flow chart that illustrates the operation of a slave topology function at a User Equipment (UE) that is selected as a potential candidate UE to receive and respond to a feasibility request from the master topology function in accordance with an embodiment of the present disclosure;
Figure 7 is a flow chart that illustrates one example embodiment of step 602 of Figure 6;
Figures 8A and 8B provide a flow chart that illustrates the operation of a slave topology function of a UE to perform Quality of Service (QoS) predetermination in accordance with one example embodiment of the present disclosure;
Figures 9 through 11 illustrate one example of an existing system for reliable Device-to-Device (D2D) communication;
Figure 12 illustrates an embodiment of the system of Figure 1 in which the centralized scheduler of Figure 9 is implemented as part of the master topology function, and the UEs include respective synthetic transmitters and synthetic receivers, in accordance with an embodiment of the present disclosure;
Figure 13 illustrates one example of the QoS predetermination procedure in accordance with an embodiment of the present disclosure;
Figure 14 continues the example of Figure 5 but shows the procedure for configuring the UEs that are in the confirmed topology for the multi-path connection;
Figures 15 through 17 are schematic block diagrams of example embodiments of a network node; and
Figures 18 and 19 are schematic block diagrams of example embodiments of a UE.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" or "wireless node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states.

**Direct Link:** As used herein, a "direct link" is a wireless communication link between two wireless nodes that does not pass through any relay devices (e.g., a downlink from a RAN node to a wireless communication device, a direct Device-to-Device (D2D) link between two wireless communication devices, or the like).

**Multi-Hop Link:** As used herein, a "multi-hop link" is a link between two wireless communication devices that passes through one or more relay devices (i.e., a link that passes from a RAN node to a target wireless communication devices through one or more other wireless communication devices acting as relays or a link that passes from a source wireless communication device to a target wireless communication device through one or more other wireless communication devices acting as relays).

**Link:** As used herein, a "link," which is also sometimes referred to herein as an End-to-End (E2E) link, is either a direct link or a multi-hop link.

**Direct D2D Link:** As used herein, a "direct D2D link" is a D2D link between two wireless communication devices that does not pass through any relay devices (i.e., does not pass through any other wireless communication devices acting as a relay). A direct D2D link is one type of direct link. Also note that a direct D2D link may form part of a multi-hop link. For example, a multi-hop link from a RAN node to a target wireless communication device may be: RAN Node → UE A → UE B, where UE A → UE B is a direct D2D link that forms part of the multi-hop link from the RAN node to UE B.

**Multi-Hop D2D Link:** As used herein, a "multi-hop D2D link" is a D2D link between two wireless communication devices that passes through one or more relay devices (i.e., a D2D link that passes from a source wireless communication device to a target wireless communication device through one or more other wireless communication devices acting as relays). As an example, the following D2D link is a multi-hop D2D link from UE A to UE C: UE A → UE B → UE C, where each of the two arrows represent direct D2D links between the adjacent UEs and together these direct D2D links form the multi-hop D2D link from UE A to UE C. A multi-hop D2D is one type of multi-hop link. Also note that a multi-hop D2D link may form part of a multi-hop link. For example, a multi-hop link from a RAN node to a target wireless communication device may be: RAN Node → UE A → UE B → UE C, where UE A → UE B → UE C is a multi-hop D2D link that forms part of the multi-hop link from the RAN node to UE C.

**D2D Link:** As used herein, a "D2D link," which is also sometimes referred to herein as an E2E D2D link, is either a direct D2D link or a multi-hop D2D link.

**Multi-Path Connection:** As used herein, a "multi-path connection" is a connection that consists of two or more links that are in parallel (i.e., simultaneous) and traverse different paths between two wireless nodes, e.g., for purposes of redundancy. A multi-path connection may include a primary link and one or more redundant links, for example.

**Multi-Path D2D Connection:** As used herein, a "multi-path D2D connection" is a connection that consists of two or more D2D links that are in parallel (i.e., simultaneous) and traverse different paths between two wireless communication devices, e.g., for purposes of redundancy.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Systems and methods are disclosed herein for determining a topology for a multi-path connection based on one or more application-level requirements of a particular application that is to use the multi-path connection. As used herein, a "topology" for a multi-path connection is the way in which wireless nodes are connected via direct links to form the multi-path connection. Transmissions made over the multi-path connection may be referred to as multipoint transmissions since the transmissions are received at the target wireless communication device from multiple transmission points, which in the case of the multi-path connection are other wireless nodes in respective direct or multi-hop links from the source wireless node to the target wireless communication device. Use cases such as, for example, industrial automation use cases, cloud robotics, and commercial use cases such as collaborative gaming could greatly benefit from embodiments of the systems and methods disclosed herein. Some embodiments of the systems and methods disclosed herein also have relevance when the radio links are served with higher radio frequencies such as millimeter wave (mmWave) frequencies (>28 gigahertz (GHz)), where more Line of Sight (LoS) data transmission would be beneficial.

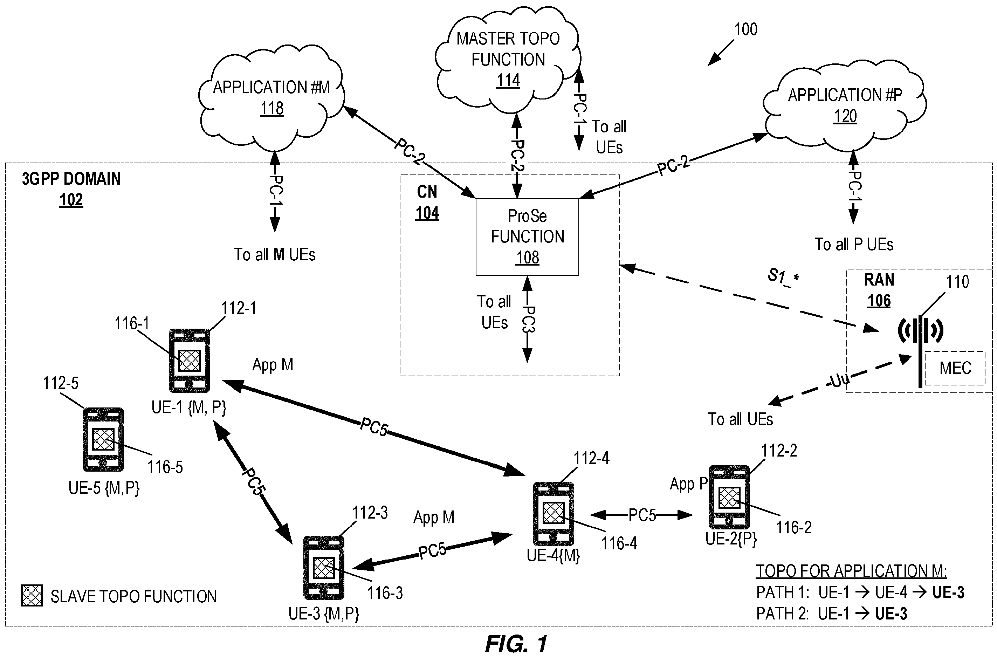

In this regard, Figure 1 illustrates one example of a communication system 100 in which embodiments of the present disclosure may be implemented. As illustrated, the communication system 100 includes a 3GPP domain 102 that includes a core network 104 and a RAN 106. While not illustrated, the core network 104 includes many core network nodes, as will be appreciated by one of skill in the art. The core network 104 includes a Proximity Service (ProSe) function 108. In this example, the RAN 106 is shown as including a single RAN node 110; however, it should be understood that the RAN 106 typically includes many RAN nodes. The RAN 106 provides radio access to UEs, which in this example include UEs 112-1 through 112-5, that are in-coverage of the RAN 106. Note that the UEs 112-1 through 112-5 are also denoted herein as UE1 through UE5. Also note that the UEs 112-1 through 112-5 are generally referred to individually as UE 112 and collectively as UEs 112.

In the embodiments of the solution described herein, a master topology function 114 works together with slave topology functions 116-1 though 116-5 (sometimes generally referred to individually as slave topology functions 116 and collectively as slave topology functions 116) to provide a topology function that determines a topology for a multi-path connection from a source wireless node to a target wireless node based on one or more application-level requirements of a particular application (e.g., a particular Ultra-Reliable Low-Latency (URLLC) application) that is to use the multi-path connection and capabilities of the UEs 112-1 through 112-5. In one embodiment, the multi-path connection is a multi-path D2D connection between a pair of UEs 112 including a source UE (denoted herein as source UE 112-S) and a target UE (denoted herein as target UE 112-T). In another embodiment, the target UE 112-T for the multi-path connection is in-coverage of the RAN node 110, and the multi-path connection includes a direct link between the RAN node 110 and the target UE 112-T and one or more multi-hop links from the RAN node 110 to the target UE 112-T through one or more other UEs 112 acting as relays (denoted herein as relay UEs 112-R). In yet another embodiment, the target UE 112-T for the multi-path connection is out-of-coverage of the RAN node 110, and the multi-path connection includes two or more multi-hop links from the RAN node 110 to the target UE 112-T through one or more other UEs 112 acting as relays (denoted herein as relay UEs 112-R).

Figure 1 illustrates an example for an application 118 (also denoted as "Application #M"). In the example for the application 118 (Application #M), based on the application-level requirement(s) of the application 118 and the capabilities of the UEs 112, the master topology function 114 works together with the slave topology functions 116 to determine a topology for a multipath D2D link from UE 112-1 to UE 112-3 that includes a first path formed by a multi-hop D2D link from UE 112-1 to UE 112-3 through UE 112-4 (sometimes denoted herein as multi-hop D2D link UE1 → UE4 → UE3) and a second (simultaneous) path formed by a direct D2D link from UE 112-1 to UE 112-3 (denoted as direct D2D link UE1 → UE3). Note that data for the particular application may, for example, be communicated between a node running Application #M or a component of Application #M (e.g., a server connected to the 3GPP domain 102 via a private or public network) and the UE 112-3 may be sent via the 3GPP domain 102 to UE 112-1 via the RAN node 110. The UE 112-1 then transmits this data to the UE 112-3 via the multi-path D2D connection from UE 112-1 to UE 112-3. As another example, Application #M is running on UE 112-1, and the data for Application #M is transmitted from UE 112-1 to UE 112-2 via the multi-path D2D connection. Note that, in a similar manner, the master topology function 114 and the slave topology functions 116 work together to determine topologies for multi-path D2D connections for other applications, such as application 120 (also denoted as Application #P), based on the application-level requirement(s) of those applications.

The master topology function 114 is, in one example, implemented in or in association with the RAN node 110. For instance, the master topology function 114 may be implemented in a Mobile Edge Computing (MEC) node associated with the RAN node 110. In another example, the master topology function 114 is implemented in the core network 104. In yet another example, the master topology function 114 is implemented in the cloud and there may be synergy gains from co-location of the applications that need to be served. The slave topology functions 116-1 though 116-5 are implemented at the respective UEs 112-1 through 112-5.

The ProSe function 108 is, in this example, the ProSe function defined in 3GPP that can provide device discovery and device communication services. The ProSe function 108 interfaces to the master topology function 114 via the PC2 interface. The ProSe function 108 could, for example, perform authentication of the UEs 112. Note that the ProSe function 108 is only an example of a function that could be used by the master topology function 114 for obtaining information about the locations of the UEs 112. Other equivalent functions can alternatively be used. For example, if the UEs 112 are MTC devices operating on a factory floor, other functions for obtaining the locations and trajectories of the UEs 112 are known and could be used by the master topology function 114. Also, other authentication mechanisms may be used.

The interfaces illustrated in Figure 1 are as follows:
- PC1: Application to UE communication interface,
- PC2: ProSe function/3GPP network to application server communication interface,
- PC3: UE to ProSe function communication interface, and
- PC5: UE to UE communication interface.

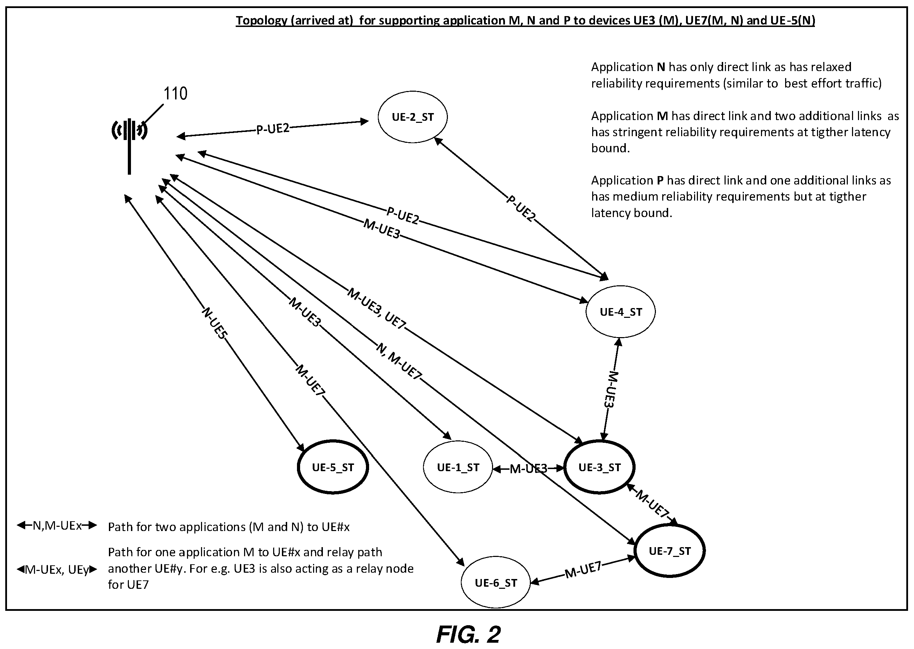

In the example of Figure 1 for Application #M, the multi-path connection for which the topology is determined is a multi-path D2D connection from the source UE 112-1 to the target UE 112-3. However, in another embodiment, the multi-path connection is a multi-path connection from the RAN node 110 to a target UE 112-T, where the multi-path connection includes at least two links (paths) at least one of which includes a direct D2D link or a multi-hop D2D link. In this regard, Figure 2 illustrates examples of topologies that may be determined by the master topology function 114 in accordance with embodiments of the present disclosure. For these examples, there are three applications M, N, and P having different application-level requirements. In these examples, the application-level requirements are reliability requirements with bounded latency, wherein the reliability requirements are relaxed (e.g., Application N seen as equivalent to best effort, Application P is medium, and Application M is most stringent). Note that the topologies include both direct links (lowest latency) from the source wireless node, which is the RAN node 110, and the target UE 112-T, and redundant multi-hop links (for additional robustness) that also satisfy the latency requirements of the respective applications.

In Figure 2, the target UEs for Application M are UEs 112-3 and 112-7, the target UE for Application N is UE 112-5, and the target UE for Application P is UE 112-2. In order to support Application M (e.g., motion control), the master topology function 114 determines a topology for a multi-path connection from the RAN node 110 to the target UE 112-7 for Application M that includes: (1) a direct link from the RAN node 110 to the target UE 112-7, (2) a multi-hop link from the RAN node 110 to the target UE 112-7 via UE 112-3 acting as a relay, and (3) a multi-hop link from the RAN node 110 to the target UE 112-7 via UE 112-6 acting as a relay, in order to be able meet Application M's stringent reliability requirements at a tighter latency bound. In a similar manner, the master topology function 114 determines a topology for a multi-path connection from the RAN node 110 to the target UE 112-3 for Application M that includes: (1) a direct link from the RAN node 110 to the target UE 112-3, (2) a multi-hop link from the RAN node 110 to the target UE 112-3 via UE 112-1 acting as a relay, and (3) a multi-hop link from the RAN node 110 to the target UE 112-3 via UE 112-4 acting as a relay. The master topology function 114 determines a topology for a multi-path connection from the RAN node 110 to the target UE 112-2 for Application P that includes: (1) a direct link from the RAN node 110 to the target UE 112-2 and (2) a multi-hop link from the RAN node 110 to the target UE 112-2 via UE 112-4 acting as a relay. Thus, this multi-path connection has only two paths because Application P has medium reliability requirements. The master topology function 114 determines a topology for a link from the RAN node 110 to the target UE 112-5 for Application N that includes only a direct link from the RAN node 110 to the target UE 112-5 because it has relaxed reliability requirements.

Note that, in Figure 2, UE-#_ST indicates the slave topology function 116 residing on the UE-#. The master topology function 114 is not shown in Figure 2.

The following description explains the functionality of master and slave topology functions 114 and 116 and details on message exchange/signaling during the topology determination process.

For the description below, the following terms are used and are defined as follows:
- Potential Candidate UE: A UE 112 that has the potential to act as a node in a topology for a multi-path connection. As described below, potential candidate UEs are evaluated by the master topology function 114 to determine a candidate topology for multi-path connection to a target UE 112-T. As discussed below, the potential candidate UEs can be chosen based on, for example, any one or more of following criteria: previous history (if available) as a relay in a topology for a multi-path connection, location (e.g., proximity to the target UE 112-T or proximity to cell boundary), probability of LoS with the RAN node 110, etc.
- Candidate Topology: A candidate topology is a topology determined by the master topology function 114 using at least a subset of the potential candidate UEs. The potential candidate UEs that are included in the candidate topology (e.g., based on feasibility) are referred to herein as candidate UEs. As discussed below, the candidate topology may be determined using a subset of the potential candidate UEs that are determined to be feasible as relay nodes based on feasibility reports obtained from the potential candidate UEs. In one embodiment, potential candidate UEs that are determined to be feasible are candidate UEs that form the candidate topology.
- Confirmed Topology: A confirmed topology is a candidate topology that is confirmed by the master topology function 114 based on a QoS predetermination procedure, as described below. The QoS predetermination procedure may include QoS predetermination between the candidate UEs in the connection order in the candidate topology. A UE in the confirmed topology is referred to herein as a confirmed UE.
- Feasibility Report: A report sent by a slave topology function 116 to the master topology function 114 indicating the feasibility of the respective potential candidate UE being a relay in the topology based on a current (e.g., and near-future) snapshot of UE capabilities and also the application-level requirements. The feasibility report can also contain the link quality history.
- Target UE: A UE 112 that is the intended receiver of a multi-path connection. For example, in a closed loop motion control application, the UE on which an actuator resides is the target UE for a multi-path connection for the closed loop motion control application.

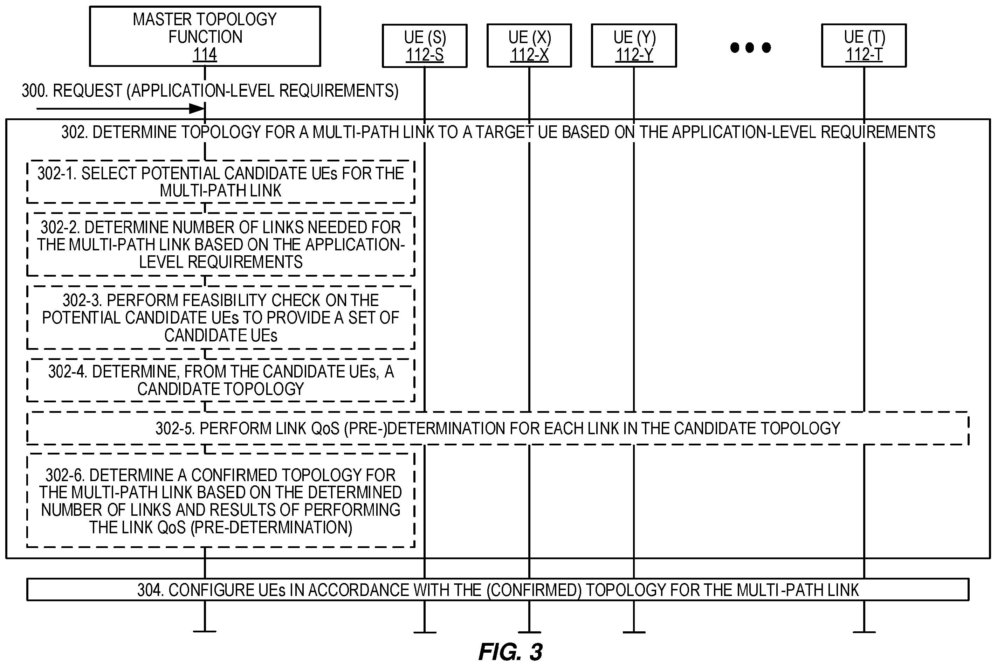

Figure 3 illustrates the operation of the communication system 100 of Figure 1 to determine and use a multi-path connection based on application-level requirements of an application to use the multi-path connection in accordance with embodiments of the present disclosure. Note that optional steps are represented by dashed lines/boxes. As illustrated, the master topology function 114 receives a request from a particular application for a topology for a multi-path connection to a target UE 112-T (step 300). The request may originate from, for example, a node on which the particular application or a component of the particular application is running (e.g., a server computer connected to the 3GPP domain 102 via a public or private network, a network node in the 3GPP domain 102, or a UE 112 such as, e.g., a source UE 112-S for the multi-path connection). The request includes information that directly or indirectly indicates one or more application-level requirements of the particular application for which the multi-path connection topology is requested. This information may be information that directly indicates the application-level requirement(s) or information that indicates the particular application where the master topology function 114 is able to obtain the application-level requirements for the indicated application, e.g., from storage or from another network node. In one embodiment, the particular application is a URLLC application, and the application-level requirement(s) for the URLLC application includes an application-level latency requirement, an application-level Quality of Service (QoS) requirement, and/or the like. The request also includes information that indicates the target UE 112-T.

The master topology function 114 works with the slave topology functions 116 to determine a topology for the multi-path connection from a source wireless node (e.g., the RAN node 110 or a source UE 112-S) to the target UE 112-T based on the application-level requirement(s) for the particular application and capabilities of the UEs 112 (step 302). More specifically, in one embodiment, the master topology function 114 selects potential candidate UEs, from among the UEs 112, for the multi-path connection (step 302-1). This selection of the potential candidate UEs is based on locations of the UEs 112 (e.g., proximity to the target UE 112-T) and/or capabilities of the UEs 112. In one embodiment, the master topology function 114 obtains a set of UEs, from among the UEs 112, that can potentially serve as relay nodes between the source wireless node and the target UE 112-T based on the locations of the UEs 112. Note that the locations of the UEs 112 may be obtained from the ProSe function 108. Alternatively, the master topology function 114 may query the ProSe function 108 to obtain the set of UEs, where the query may include, for example, information that identifies the target UE 112-T. The set of UEs determined based on location may then be filtered based on the capabilities of those UEs to determine the potential candidate UEs for the multi-path connection. Here, the capabilities of the UEs include one or more UE capabilities related to operation as a relay node for a multi-hop link. These capabilities may include, for example, the capability to operate as a relay node, (estimated) time needed to switch from receive mode to transmit mode when operating as a relay, QoS guaranteeing capabilities of the UE, energy related capability(ies) (e.g., battery capacity, current battery level, etc.), reliability history (e.g., past failure rate), Radio Access Technology (RAT) used by the UE (e.g., NR, LTE, etc.), or the like, or any combination thereof. In addition, the selection of the potential candidate UEs may consider known or predicted future locations of the UEs 112. For example, if a particular UE 112 is an MTC device that moves in a known manner throughout a known environment (e.g., within a factory), then information about this known movement can be used to select (or not select) the UE 112 as a potential candidate UE for the multi-path connection.

The master topology function 114 determines the number of links (or paths) needed for the multi-path connection based on the application-level requirement(s) of the particular application that is to use the multi-path connection (step 302-2). In one embodiment, a mapping between different application-level requirements and numbers of links (i.e., paths) needed to satisfy those application-level requirements is predetermined or preconfigured at the master topology function 114. This mapping is used to determine the number of links needed to satisfy the application-level requirement(s) of the particular application that is to use the multi-path connection. In another embodiment, the number of links needed for the multi-path connection based on the application-level requirement(s) of the particular application that is to use the multi-path connection is determined by the master topology function 114 using a predefined or preconfigured function. One example is described below in detail. Note that, if the number of potential candidate UEs selected in step 302-1 is insufficient to provide the determined number of links needed for the multi-path connection, then the application may be notified that the multi-path connection cannot be established or that the multi-path connection may not be able to satisfy the application-level requirement(s).

The master topology function 114 may also perform a feasibility check on the potential candidate UEs to thereby provide a set of candidate UEs (step 302-3). The feasibility check removes potential candidate UEs that cannot satisfy requirements needed to act as a relay when considering the application-level requirement(s). The feasibility check may consider static or semi-static parameters such as, for example, a current application-level load at the potential candidate UEs. Thus, for example, if a potential candidate UE is already acting as a relay for another multi-path connection such that the UE is not able to currently operate as a relay for this multi-path connection, then that potential candidate UE is removed (i.e., is not included in the set of candidate UEs).

The master topology function 114 determines, from the candidate UEs, a candidate topology for the multi-path connection (step 302-4). The candidate topology includes at least the determined number of links needed to satisfy the application-level requirement(s). In addition, the candidate topology may include one or more additional links, e.g., for redundancy or fallback. The candidate multi-path connection includes either: (a) two or more multi-hop links from the source wireless node to the target UE 112-T or (b) both a direct link from the from the source wireless node to the target UE 112-T and one or more multi-hop links from the source wireless node to the target UE 112-T. In one embodiment, the candidate topology includes all of the candidate UEs. For example, in one embodiment, each of the links in the multi-path connection includes a single relay, which is one of the candidate UEs. In this case, determining the candidate topology may simply be determining that all of the candidate UEs are to be used as relays in respective links. As another example, there may be more candidate UEs than needed to provide the determined number of links needed to satisfy the application-level requirement(s), in which case the master topology function 114 may select a subset of the candidate UEs to use for the candidate topology to provide the needed number of links or the needed number of links plus one or more additional links for potential fallback links in the event of a link failure.

The master topology function 114 initiates a QoS (pre-)determination procedure in which a QoS for each link, or at least for each link that includes at least one D2D link, in the candidate topology is determined and reported to the master topology function 114 (step 302-5). As discussed below, in one embodiment, the QoS predetermination procedure uses transmission of synthetic packets over each direct D2D link (i.e., each direct D2D link between adjacent UEs 112 in a multi-hop link). In one embodiment, the master topology function 114 configures the slave topology functions 116 of the candidate UEs in the candidate topology as a transmitter (i.e., source UE 112-S in the case where the source wireless node is a UE 112, or UE 112 having link to the RAN node 110 in the scenario in which the RAN node 110 is the source wireless node), a relay, or a receiver (i.e., target UE 112-T) and may also configure one or more parameters used for synthetic packet generation such as, e.g., packet size, time bound, etc. The slave topology functions 116 of the candidate UEs then operate to transmit/relay/receive synthetic packets in accordance with their configurations. At least some of the candidate UEs then generate respective QoS reports and send them to the master topology function 114. These QoS reports may include, for example, Packet Success Rate (PSR), actual transmit mode to receive mode switching time when operating in relay mode, and/or the like.

Based on the QoS reports obtained via the QoS (pre-)determination procedure and the determined number of links needed for the multi-path connection, the master topology function 114 determines a confirmed topology for the multi-path connection (step 302-6). For example, in one embodiment, the candidate topology includes more than the needed number of links for the multi-path connection, and the master topology function 114 selects at least the needed number (N_{Needed}) of links for the multi-path connection from the candidate topology based on the QoS reports. In one embodiment, the confirmed topology includes a primary link and a number (N_{Red}) of redundant links, where N_{Red} is equal to or greater than N_{Needed} where N_{Needed} is the determined number of links needed for the multi-path connection. In one embodiment, the primary link is a best link from among the links in the candidate topology in terms of one or more parameters (e.g., highest packet success rate as determined from the respective QoS report(s)), and the redundant link(s) are other links from among the links in the candidate topology that satisfy a threshold criterion (e.g., packet success rate is greater than a threshold, where this threshold may be based on the application-level requirement(s) of the particular application).

Note that, in one embodiment, the redundant links are reserved as one(s) with more risk (e.g., lower packet success rate but still meets the threshold) so that topology does not have to be re-determined in case QoS cannot be met with the initial set of links.

The master topology function 114 then configures the wireless nodes (i.e., UEs 112 and, in some embodiments, the RAN node 110) that are included in the confirmed topology in accordance with the confirmed topology for the multi-path connection (step 304). In other words, the master topology function 114 configures the wireless nodes that are in the confirmed topology to operate transmit and/or receive packets for the particular application in accordance with the confirmed topology. Particularly for the relay UEs 112-R, the configuration may include, in some embodiments, one or more parameters related to operation as a relay for the multi-path connection such as, e.g., relay type (e.g., amplify-and-forward or decode-and-forward), transmit/receive power, frequency band(s), or the like. The UEs 112 that are in the confirmed topology then operate as configured to provide the multi-path connection from the source wireless node to the target UE 112-T for the particular application.

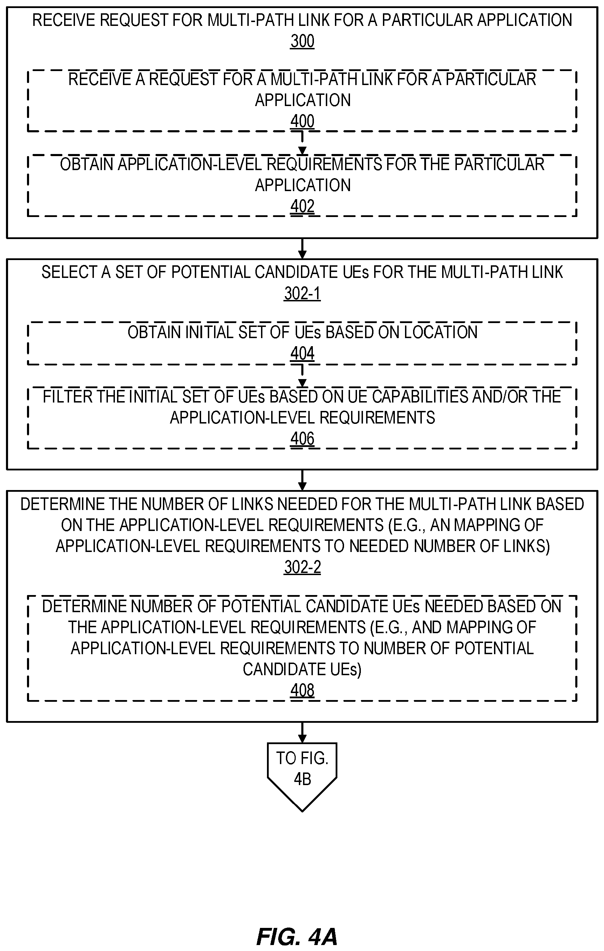

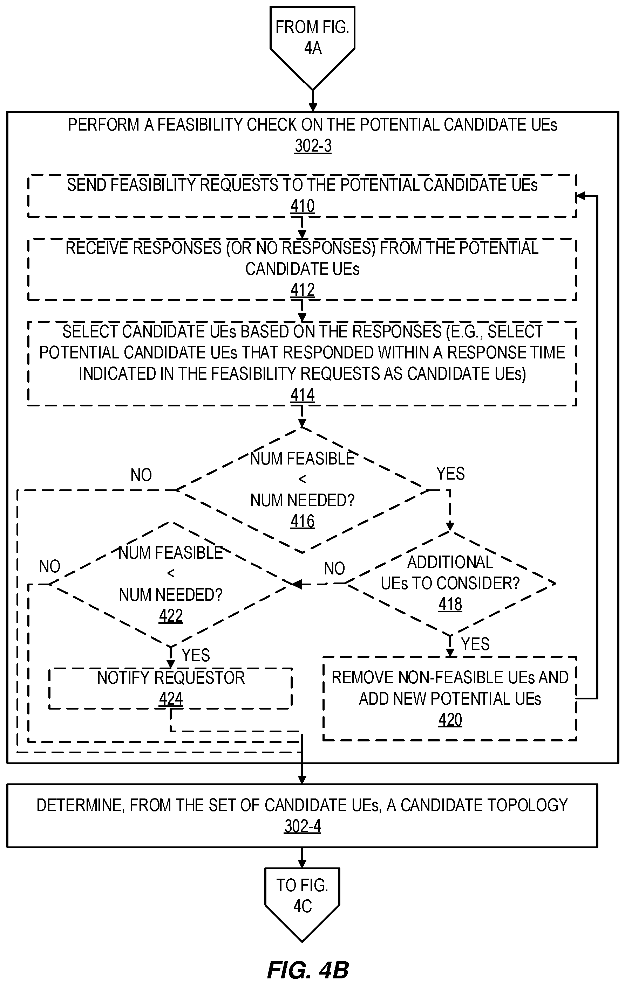

Figures 4A through 4C provide a flow chart that illustrates the operation of the master topology function 114 in more detail, in accordance with an embodiment of the present disclosure. Note that optional steps are represented by dashed lines/boxes. This process is a more detailed version of an embodiment of the process illustrated in Figure 3 in regard to the master topology function 114. As such, steps in the flow chart that correspond to steps in the procedure of Figure 3 are indicated by the use of the same reference number as used in Figure 3.

As illustrated, the master topology function 114 receives a request for a topology for a multi-path connection to a target UE 112-T for a particular application (step 300). As discussed above, the request may originate from, for example, a node on which the particular application or a component of the particular application is running (e.g., a server computer connected to the 3GPP domain 102 via a public or private network, a network node in the 3GPP domain 102, or a UE 112 such as, e.g., a source UE 112-S for the multi-path connection). The request includes information that directly or indirectly indicates one or more application-level requirements of the particular application for which the multi-path connection topology is requested, as discussed above. The request also includes information that indicates the target UE 112-T. In one embodiment, in regard to receiving the request, the master topology function 114 receives the request, where the request comprises information that indicates the particular application (step 400). The master topology function 114 then obtains the application-level requirement(s) for the particular application, e.g., from storage or from another network node (step 402).

The master topology function 114 selects a set of potential candidate UEs, from among the UEs 112, for the topology (step 302-1). In one embodiment, in order to select the potential candidate UEs, the master topology function 114 obtains an initial set of UEs based on locations of the UEs 112 (e.g., proximity to the target UE 112-T) (step 404). For example, the initial set of UEs may include the UEs 112 that are in proximity to the target UE 112-T. The master topology function 114 then filters the initial set of UEs based on the capabilities of the UEs 112 in the initial set of UEs and/or the application-level requirement(s) of the particular application to provide the set of potential candidate UEs that can potentially serve as relay nodes between the source wireless node and the target UE 112-T (step 406). Note that the locations of the UEs 112 may be obtained from the ProSe function 108 and used by the master topology function 114 in step 404 to determine the initial set of UEs. Alternatively, the master topology function 114 may query the ProSe function 108 to obtain the initial set of UEs, where the query may include, for example, information that identifies the target UE 112-T. Also note that the capabilities of the UEs 112 may be known to the master topology function 114 or obtained by the master topology function 114 from the UEs 112 or from a network node in the 3GPP domain 102. As discussed above, the capabilities of the UEs include one or more UE capabilities related to operation as a relay node for a multi-hop link. These capabilities may include, for example, capability to operate as a relay node, (estimated) time needed to switch from receive mode to transmit mode when operating as a relay, QoS guaranteeing capabilities of the UE, energy related capability(ies) (e.g., battery capacity, current battery level, etc.), reliability history (e.g., past failure rate), RAT used by the UE (e.g., NR, LTE, etc.), or the like, or any combination thereof. In addition, the selection of the potential candidate UEs may consider known or predicted future locations of the UEs 112. For example, if a particular UE 112 is an MTC device that moves in a known manner throughout a known environment (e.g., within a factory), then information about this known movement can be used to select (or not select) the UE 112 as a potential candidate UE for the multi-path connection.

The master topology function 114 determines the number of links (or paths) needed for the multi-path connection based on the application-level requirement(s) of the particular application that is to use the multi-path connection (step 302-2). In one embodiment, this is done by determining the number of UEs 112 needed based on the application-level requirement(s) of the particular application (step 408). As discussed above, in one embodiment, a mapping between different application-level requirements and numbers of links (i.e., paths) needed to satisfy those application-level requirements is predetermined or preconfigured at the master topology function 114. This mapping is used to determine the number of links needed to satisfy the application-level requirement(s) of the particular application that is to use the multi-path connection. In another embodiment, the number of links needed for the multi-path connection based on the application-level requirement(s) of the particular application that is to use the multi-path connection is determined by the master topology function 114 using a predefined or preconfigured function. One example is described below in detail. Note that, if the number of potential candidate UEs selected in step 302-1 is insufficient to provide the determined number of links needed for the multi-path connection, then the application may be notified that the multi-path connection cannot be established or that the multi-path connection may not be able to satisfy the application-level requirement(s).

The master topology function 114 may also perform a feasibility check on the potential candidate UEs to thereby provide a set of candidate UEs (step 302-3). In one embodiment, in order to perform the feasibility checks, the master topology function 114 sends a feasibility request to each of the potential candidate UEs (step 410). Note that, in one embodiment, potential candidate UEs are assumed to be in-coverage. The master topology function 114 receives responses from at least some of the potential candidate UEs (step 412). Based on the response or lack of responses from the potential candidate UEs, the master topology function 114 selects a subset of the potential candidate UEs that are feasible for the topology as the set of candidate UEs (step 414). The master topology function 114 may then check whether the number of candidate UEs is less than the number needed to provide needed number of links (i.e., less than the needed number of links in the embodiment in which each link includes only a single relay) (step 416). If so, the master topology function 114 determines whether additional UEs can be added as new potential candidate UEs (step 418). If so, new potential candidate UEs are added and non-feasible UEs are removed from the set of potential candidate UEs (step 420), and the process returns to step 410 and is repeated. Note that steps 410 and 412 may only be repeated for the new potential candidate UEs. Returning to step 418, if there are no additional UEs to be considered, the master topology function 114 determines whether the number of feasible UEs (i.e., the number of identified candidate UEs) is still less than the number needed to provide the needed number of links (step 422). If so, the master topology function 114 may notify the requestor that a degraded topology is possible (step 424). Note that in an extreme case where no feasible UEs are identified, the notification in step 424 may be that no topology is possible and the process would end. If the number of candidate UEs after the feasibility check is sufficient to provide the needed number of links or if the number of candidate UEs after the feasibility check is sufficient to provide a degraded topology, the procedure proceeds to step 302-4 where the master topology function 114 determines a candidate topology for the multi-path connection using the candidate UEs, as described above (step 302-4).

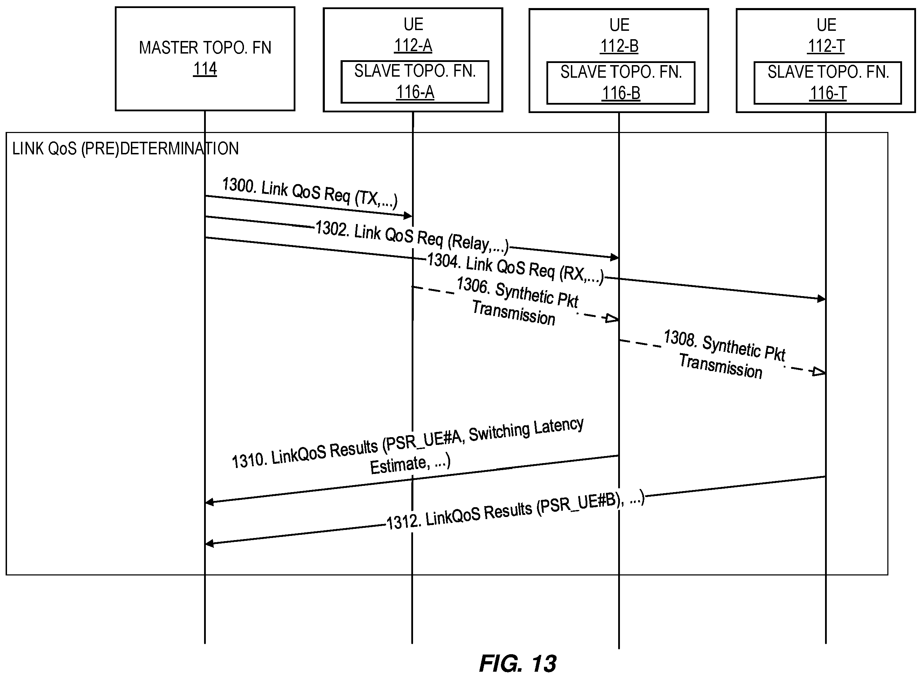

The master topology function 114 initiates a QoS (pre-)determination procedure in which a QoS for each link, or at least for each link that includes at least one D2D link, in the candidate topology is determined and reported to the master topology function 114 (step 302-5). More specifically, in one embodiment, for each link in the candidate topology (or at least for each link that includes at least one direct D2D link), the master topology function 114 sends a request for QoS (pre-)determination to each UE 112 in the link (step 426) and monitors for resulting QoS reports from the UEs 112 (step 428). Note that, in one embodiment, the direct link from the RAN node 110 to the target UE 112-T is assumed to always be used and, as such, this link is not included in QoS (pre-)determination. Additional details of the QoS (pre-)determination procedure are provided below with respect to Figure 13. In one embodiment, the master topology function 114 determines whether all of the UEs 112 have responded to the QoS predetermination requests (step 430). If not, the master topology function 114 continues to monitor for responses for an additional amount of time that is referred to herein as a guard time (step 432).

Once the QoS (pre-)determination procedure is complete, the master topology function 114 determines a confirmed topology for the multi-path connection based on the QoS reports and the candidate topology (step 302-6). More specifically, in one embodiment, the master topology function 114 determines the number of links in the candidate topology that satisfy one or more requirements related to the application-level requirements based on the QoS reports (step 434). For example, the one or more requirements may include a threshold packet success rate, where "success" is the reception of a packet correctly within a defined latency bound. This defined latency bound may be defined by or based on the application-level requirement(s) for the particular application. If the number of links determined in step 434 is not greater than or equal to the determined number of links needed for the multi-path connection based on the application-level requirement(s) of the particular application (step 436, NO), the master topology function 114 may notify the application of the possibility of degraded performance on the multi-path connection (step 438) and then proceeds to step 440. If the number of links determined in step 434 is greater than or equal to the determined number of links needed for the multi-path connection based on the application-level requirement(s) of the particular application or after the optional notification of step 438 (step 436, YES), the process proceeds to step 440. Whether proceeding from the "yes" branch of step 436 or from step 438, the master topology function 114 determines the confirmed topology for the multi-path connection based on the candidate topology and the QoS reports (step 440). For example, in one embodiment, the candidate topology includes more than the needed number of links for the multi-path connection, and the master topology function 114 selects at least the needed number of links (N_{Needed}) for the multi-path connection from the candidate topology based on the QoS reports, as discussed above. In one embodiment, the confirmed topology includes a primary link and a number (N_{Red}) of redundant links, where N_{Red} is equal to or greater than N_{Needed} where N_{Needed} is the determined number of links needed for the multi-path connection. In one embodiment, the primary link is a best link from among the links in the candidate topology in terms of one or more parameters (e.g., highest packet success rate as determined from the respective QoS report(s)), and the redundant link(s) are other links from among the links in the candidate topology that satisfy a threshold criterion (e.g., packet success rate is greater than a threshold, where this threshold may be based on the application-level requirement(s) of the particular application).

The master topology function 114 then configures the UEs 112 that are included in the confirmed topology in accordance with the confirmed topology for the multi-path connection, as discussed above (step 304).

As discussed above, one part of the process performed by the master topology function 114 to determine a topology for a multi-path connection is determining the number of links needed for the multi-path connection based on the application-level requirement(s) of the particular application that is to use the multi-path connection. As discussed above, in one embodiment, the number of links needed is determined based on a predefined or preconfigured mapping of different application-level requirements (or different combinations of application-level requirements) to the number of links needed. As also discussed above, in another embodiment, the number of links needed is determined based on a predefined or preconfigured function. In this regard, one example of a heuristic for determining the number of links needed for the multi-path connection based on the application-level requirement(s) for the particular application is provided below. In this example, the application-level requirement(s) is an application-level QoS.

The QoS to needed number of links heuristic enables the master topology function 114 to quickly determine the number of links needed for the particular application. After using this heuristic to determine the number of links needed and determining the topology for the multi-path connection to be used by the particular application, a learning procedure can be used to update the heuristic based on QoS results from an actual data transmission using the determined topology such that, if there are biases or improvements needed, the heuristic is updated for the next topology determination. In other words, the heuristic is not restrictive and can be adapted to the environment in which it is deployed. In this example embodiment, the inputs for the heuristic are the QoS parameters for the particular application (e.g., packet success rate, latency bound, etc.). These input parameters are by no means exhaustive and anyone skilled in the art can adjust the parameters used and/or the number of parameters based on the particular application(s). For example, the input parameters may further include Tsurvival (which is the survival time an application can live with in case a packet/command is missed), Tperiod if it is sending periodic data, etc.

In one example embodiment, the heuristic is described by the following pseudo-code:

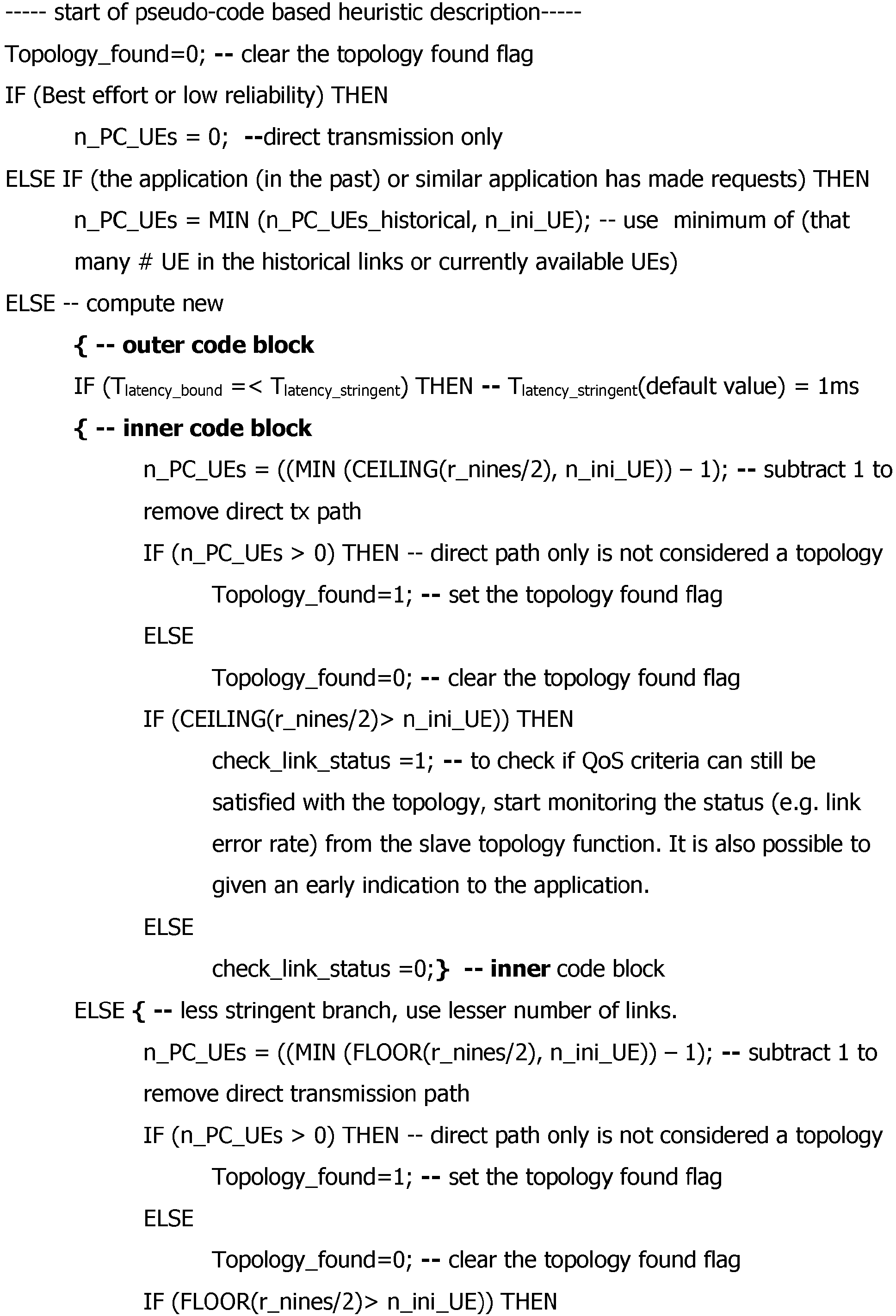

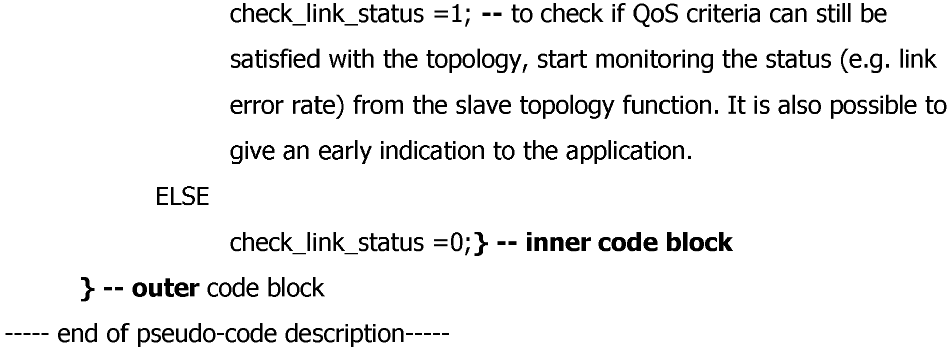

In the pseudo-code above, the following definitions apply:
- n_ini_UE = number of initial UEs that are returned by the ProSe function 108 based on location and/or based on earlier information from the slave topology functions 116 residing on the UE as to whether they performed well for an equivalent application or were facing temporary difficulty such as high work load preventing it from acting as a node in the topology;
- n_PC_UE = number of potential candidate UEs;
- r_nines= number of nines in the QoS requirement. For example, a 99.9999% packet success rate translates to six (6) nines and therefore r_nines = 6;
- T_{latency_bound}= E2E latency within which the packet success rate should be achieved;
- T_{latency_stringent} = programmable parameter to switch the heuristic to be more/less aggressive;
- "--" indicates a comment;
- ";" indicates end of a statement; and
- "{}" indicates a code block containing multiple statements.

Some notes regarding the pseudo-code are:
- CEILING and FLOOR functions return non-negative integers.
- MIN(x,y) returns minimum of x and y, where x and y are integers.
- The topology found flag is, in one embodiment, updated (remains set or is cleared) after step 302 of Figure 3.
- T_{latency_stringent} is a programmable parameter to switch the heuristic to be more/less aggressive. For example, with T_{latency_stringent} =1 millisecond (ms), an application requesting a 99.999% packet success rate (r_nines = 5) with latency bound of 1 ms and getting n_ini_UE = 5 would get n_PC_UE = 2. If latency was relaxed to 3 ms, then n_PC_UEs = 1.
- One potential enhancement is that n_ini_UE are tagged with the cell to which they belong so that the UEs that may interfere with each other can be considered mutually exclusive in the selection of n_PC_UEs from n_ini_UE.

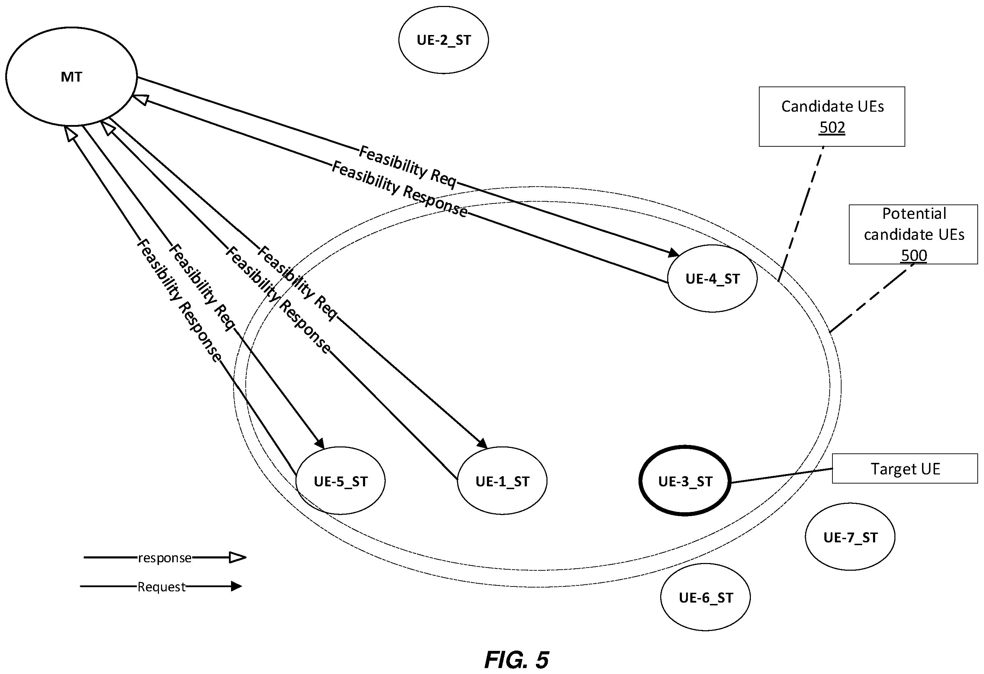

Now, the description will turn to the operation of the slave topology functions 116 at the UEs 112. In this regard, Figure 5 illustrates one example of the feasibility check process. This example is an example of the feasibility check procedure performed when determining the multi-path connection topology shown in Figure 2 for Application M with UE 112-3. As illustrated, the master topology function 114 sends feasibility check requests to each UE 112 in the set of potential candidate UEs, which in Figure 5 are referenced as the set of potential candidate UEs 500. The potential candidate UEs 500 send feasibility responses to the master topology function 114 that indicate whether they are feasible and, optionally, if not, a reason that they are not feasible. Based on the feasibility responses, the master topology function 114 selects a subset of the potential candidate UEs 500 as a set of candidate UEs 502, as described above. Note that, in this example, all of the potential candidate UEs 500 are determined to be feasible and, as such, the set of candidate UEs 502 is the same as the set of potential candidate UEs 500; however, this will not always be true. Also note that the specific sets of UEs 500 and 502 shown in the example of Figure 5 are only examples and are not to be seen as limiting.

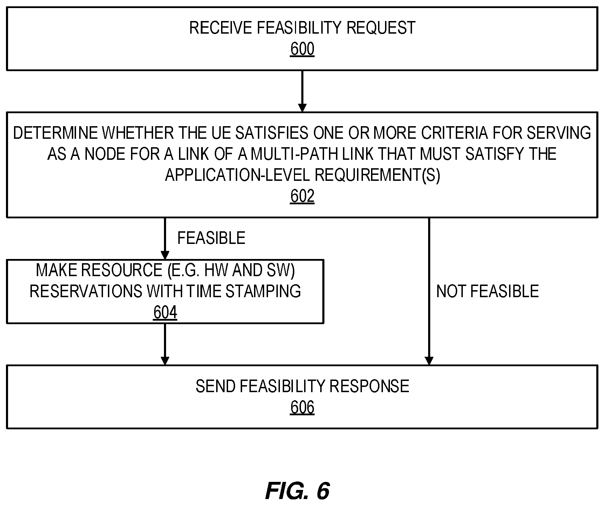

Figure 6 is a flow chart that illustrates the operation of a slave topology function 116 at a UE 112 that is selected as a potential candidate UE to receive and respond to a feasibility request from the master topology function 114. As illustrated, the slave topology function 116 receives a feasibility request from the master topology function 114 (step 600). Responsive to the feasibility request, the slave topology function 116 determines whether the respective UE 112 satisfies one or more feasibility criteria for serving as a node (e.g., a relay node) in the topology for the multi-path connection for the particular application (step 602). The one or more feasibility criteria include one or more criteria based on static capabilities of the UE 112 (e.g., supported RAT(s), switching time for switching from receive mode to transmit mode, and/or the like) and/or one or more criteria based on semi-static or dynamic capabilities of the UE 112 (e.g., current application load, expected application load for a defined period of time (e.g., next X seconds, next X minutes, or the like). Note that the application load (also referred to as workload) may vary over time and is optionally considered for the feasibility check. In this regard, the slave topology function 116 or the UE 112 in general may include a workload characterization function that determines the application load/workload of the UE 112.

If the UE 112 is determined to be feasible, then the slave topology function 116 reserves resources (e.g., hardware and/or software resources) at the UE 112 for serving as a node in the topology for the multi-path connection (step 604). The slave topology function 116 then sends a feasibly report to the master topology function 114 (step 606). The feasibility report includes information that indicates whether or not the UE 112 is feasible as a node in the topology for the multi-path connection and, optionally, information that indicates a reason if the UE 112 is determined to not be feasible.

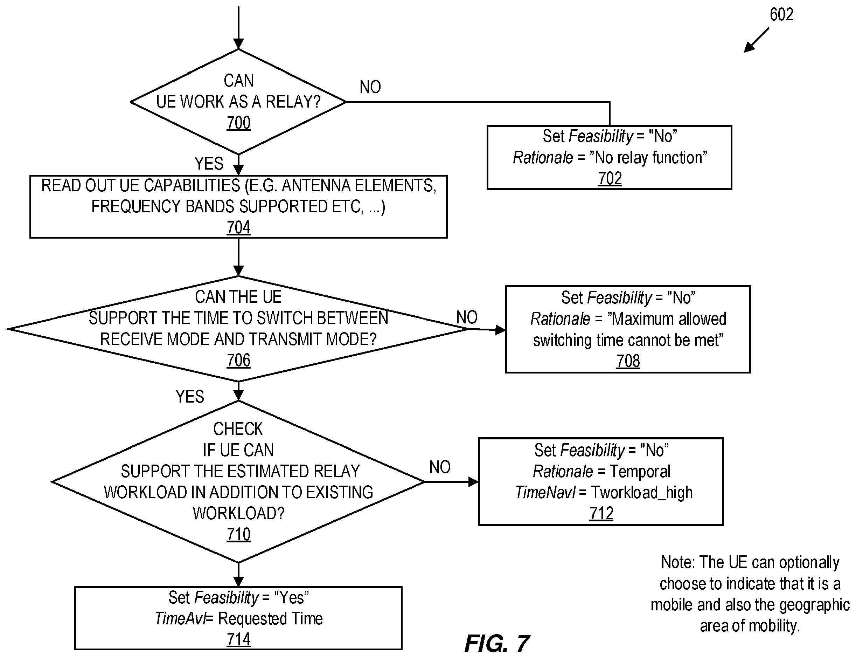

Figure 7 is a flow chart that illustrates one example embodiment of step 602 of Figure 6. As illustrated, in order to determine whether the UE 112 is feasible as a node in topology for the multi-path connection, the slave topology function 116 determines whether the UE 112 has the capability to operate as a relay (step 700). If not, the slave topology function 116 sets a feasibility parameter to "no" and sets a reason parameter to "no relay function" (step 702). If the UE 112 has the capability to operate as a relay, the slave topology function 116 reads out or obtains the (static) capabilities of the UE 112 (step 704). The capabilities include an amount of time needed for the UE 112 to switch between receive mode and transmit mode. These capabilities may also include, for example, RAT(s) supported, number of antennas, frequency band(s) supported, and/or the like. The slave topology function 116 determines whether the UE 112 can support a maximum allowed switching time for switching between receive mode and transmit mode (step 706). For example, the feasibility request may include information that indicates the maximum allowed switching time, and the slave topology function 116 may then determine whether the amount of time needed for the UE 112 to switch between receive mode and transmit mode is less than or equal to the maximum allowed switching time. If the UE 112 cannot support the maximum allowed switching time, the slave topology function 116 sets the feasibility parameter to "no" and sets the reason parameter to "maximum allowed switching time cannot be met" (step 708).

If the UE 112 can support the maximum allowed switching time, the slave topology function 116 determines whether the UE 112 can support an expected workload for a relay node in the multi-path connection topology in addition to the current (and/or expected future) workload of the UE 112 (step 710). If not, the slave topology function 116 sets the feasibility parameter to "no", sets the reason parameter to "temporal", and optionally sets a time parameter to a value Tworkload_high (step 712). Tworkload indicates for the amount of time this UE 112 is facing high workload and thereby making it unable to function as a node in the topology. This is a case of temporary inconvenience, which would go away after Tworkload_high. If the UE 112 can support the expected workload for a relay node in the multi-path connection topology in addition to the current (and/or expected future) workload of the UE 112, the slave topology function 116 sets the feasibility parameter to "yes" and optionally sets a time available parameter to value that indicates an amount of time for which the UE 112 is expected to be feasible (step 714). Note that the names of the parameters and reason values shown in Figure 7 and described above are only examples. Any parameter names and representative reason values can be used.

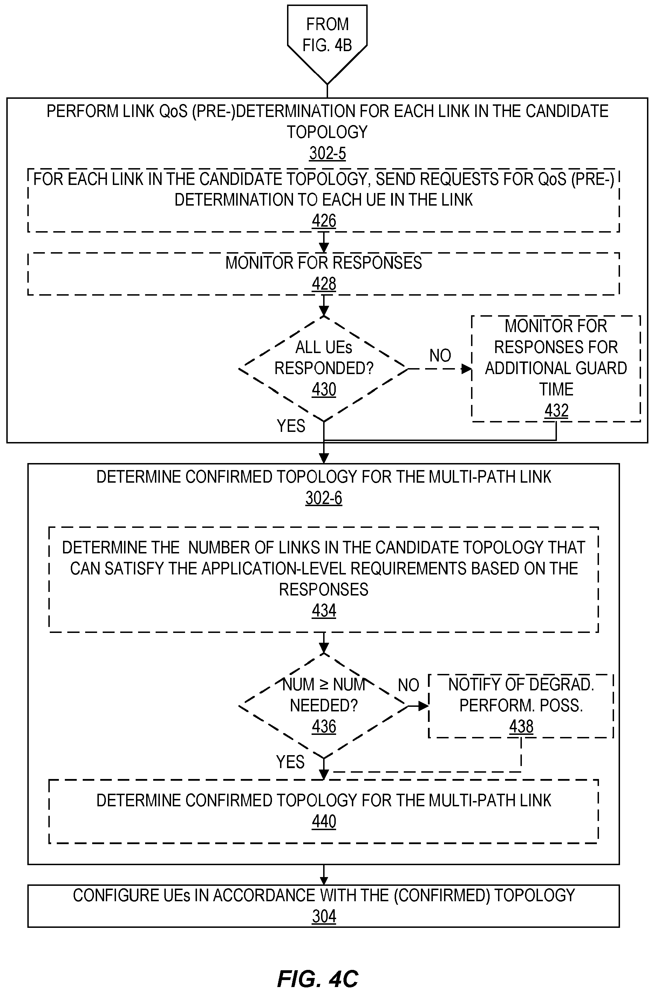

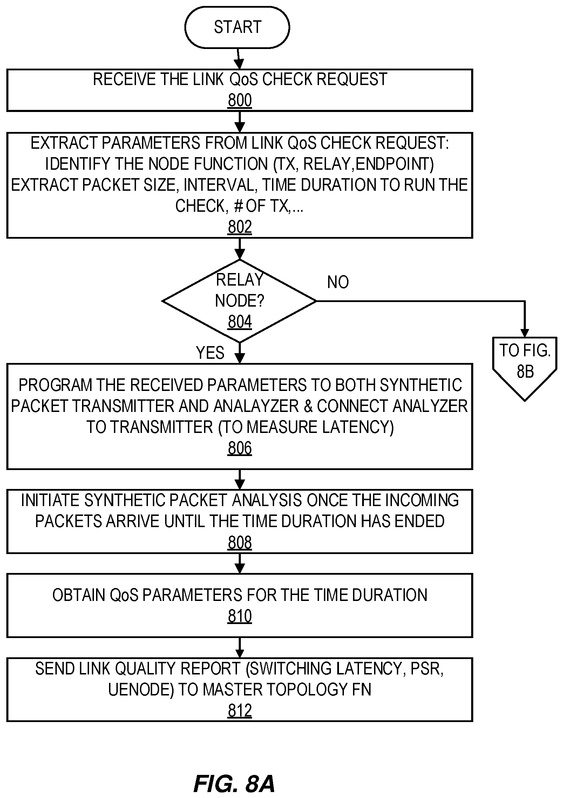

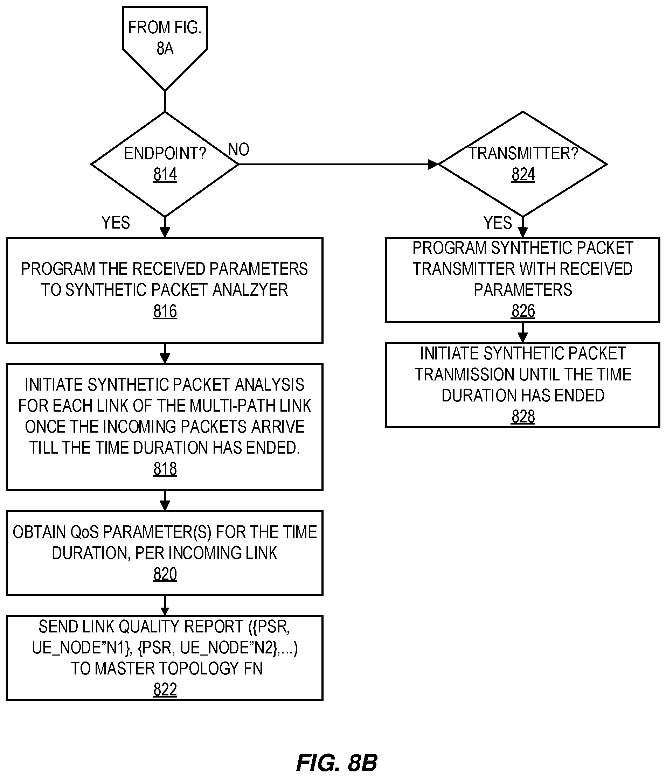

Figures 8A and 8B provide a flow chart that illustrates the operation of a slave topology function 116 of a UE 112 to perform QoS predetermination in accordance with one example embodiment of the present disclosure. As illustrated, the slave topology function 116 receives a link QoS check request from the master topology function 114 (step 800). This request corresponds to the request of step 426 of Figure 4C. Upon receiving this request, the slave topology function 116 extracts one or more parameters to be used for link QoS predetermination from the request (step 802). These parameters may include a parameter(s) that indicates a node function of the UE 112, i.e. whether the request is for the UE 112 to perform link QoS predetermination as a relay node, a transmitting node, or a receiving node. The parameters may also include, for example, a packet size, interval, time duration to run the check, number of repetitions, and/or the like in regard to synthetic packet transmission/reception by the UE 112.

The slave topology function 116 determines whether the node function is a relay node (step 804). If so, the slave topology function 116 programs both a synthetic packet transmitter and a synthetic packet receiver, or analyzer, at the UE 112 using the parameters extracted from the request (step 806). Once programmed, the synthetic packet transmitter transmits synthetic packets to the next node in the respective link of the candidate topology in accordance with the received parameters for the specified duration of time. The slave topology function 116 initiates analysis of received synthetic packets by the synthetic packet analyzer for synthetic packets received from the previous node in the respective link of the candidate topology and analyzes the received synthetic packets (step 808). For example, the synthetic packet analyzer determines whether packets are successfully received within a defined latency bound. The latency bound may be indicated in the request of step 800. The slave topology function 116 obtains, from the synthetic packet analyzer, one or more QoS parameters based on the analysis (step 810). The QoS parameters may include the success rate for synthetic packet reception (e.g., the percentage of synthetic packets transmitted to the UE 112 that were correctly received by the UE 112 within the specified latency bound). The QoS parameters may additionally or alternatively include one or more other parameters such as, e.g., switching latency, etc. The slave topology function 116 then generates and sends a QoS report to the master topology function 114 (step 812). In one embodiment, the QoS report includes the obtained QoS parameter(s).

If the node function of the UE 112 is not a relay node, the slave topology function 116 determines whether the node function of the UE 112 is a receiving node or endpoint of the respective link in the candidate topology (step 814). If so, the slave topology function 116 programs the synthetic packet analyzer with the parameters extracted from the request of step 800 (step 816). Notably, since the UE 112 is the target UE or endpoint, the synthetic packet analyzer is configured to analyze received packets for each link of the candidate multi-path topology. For each link, the synthetic packet analyzer is configured to receive and analyze synthetic packets from the previous node in the link of the candidate topology. The slave topology function 116 initiates synthetic packet reception and analysis until the specific duration of time has ended (step 818). For each link, the synthetic packet analyzer analyzes the received synthetic packets to determine one or more QoS parameters. The slave topology function 116 obtains, from the synthetic packet analyzer, the QoS parameter(s) for each link during the specified duration of time (step 820). The slave topology function 116 then generates and sends a QoS report to the master topology function 114 (step 822). In one embodiment, the QoS report includes the obtained QoS parameter(s) for each link.

If the node function of the UE 112 is not the endpoint, the slave topology function 116 determines whether the node function of the UE 112 is a transmitting node, or source wireless node, of the respective link in the candidate topology (step 824). If so, the slave topology function 116 programs the synthetic packet transmitter with the parameters extracted from the request of step 800 (step 826). Notably, the UE 112 may, in some cases, need to transmit to more than one wireless node in the candidate topology in which case the slave topology function 116 would configure the synthetic packet transmitter accordingly. The slave topology function 116 then initiates synthetic packet transmission until the specified time duration has ended (step 828).

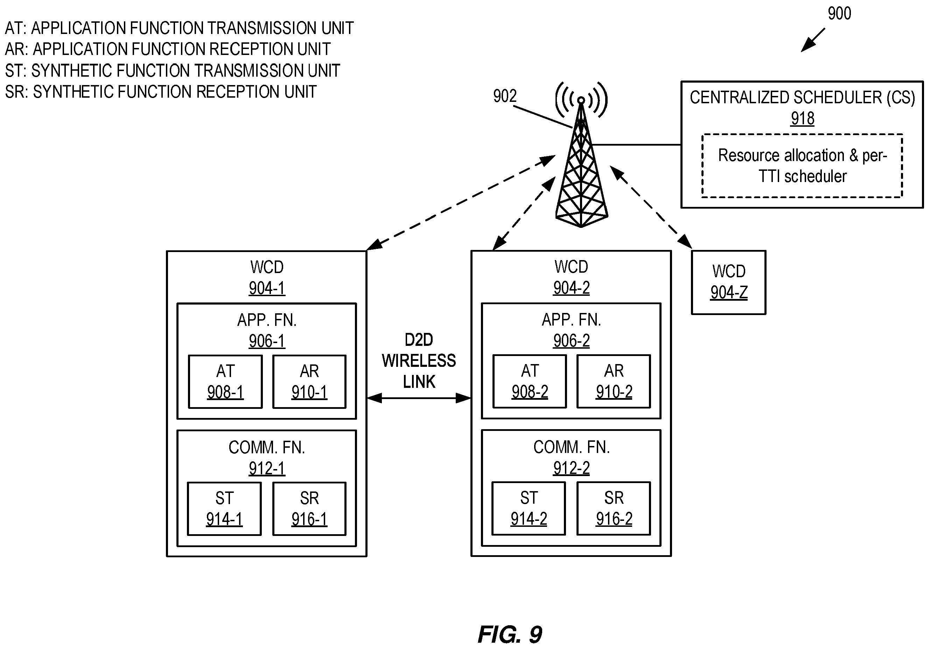

In regard to the QoS predetermination procedure, in one embodiment, the master topology function 114 and the slave topology functions 116 operate in a manner similar to that which is described for the centralized scheduler and Wireless Communication Devices (WCDs) in International Patent Application Serial No. PCT/EP2019/085325, entitled RELIABLE DEVICE-TO-DEVICE COMMUNICATION, which was filed on December 16, 2019 (hereinafter referred to as the "Related Application"). In this regard, Figures 9, 10, and 11 illustrate some aspects of the teachings of the Related Application. Note however that other schemes for predetermining the QoSs of the links in the candidate topology may be used.

Figure 9 illustrates one example of a system 900 as described in the Related Application. The system 900 includes a base station 902 in a RAN of a cellular communications system (e.g., a 3GPP cellular communications system). For example, the base station 902 may be a gNB in a 5G NR RAN; however, the base station 902 is not limited thereto. The system 900 also includes a number of WCDs 904-1 through 904-Z, which are generally referred to herein as WCDs 904. The WCDs 904 may be, for example, UEs. At least some of the WCDs 904 are capable of D2D communication. For instance, in the illustrated example, there is a D2D link between WCD 904-1 and WCD 904-2. Note, however, that there may be additional D2D links between other WCDs 904, as will be appreciated by one of skill in the art.

Using the WCD 904-1 as an example, the WCD 904-1 includes an application function 906-1 that includes an Application Function Transmission Unit (AT) 908-1 and an Application Function Reception Unit (AR) 910-1. The WCD 904-1 also includes a communication function 912-1 that includes a Synthetic Function Transmission Unit (ST) 914-1 and a Synthetic Function Reception Unit (SR) 916-1. Likewise, the WCD 904-2 includes an application function 906-2 that includes an AT 908-2 and an AR 910-2 and a communication function 912-2 that includes an ST 914-2 and an SR 916-2. In the same manner, other WCDs 904 may also include application functions 906 and communication functions 912. In some embodiments, the application functions 906, including the ATs 908 and the ARs 910, are implemented in software (e.g., software that is executed by processing circuitry of the WCDs 904 to cause the WCDs 904 to perform the functions of the communication functions 912 described herein); however, the application functions 906 are not limited thereto. In some embodiments, the communication functions 912, including the STs 914 and the SRs 916, are implemented in software or a combination of hardware and software (e.g., software executed by processing circuitry of the WCDs 904 to cause the WCDs 904 to perform the functions of the communication functions 912 described herein); however, the communication functions 912 are not limited thereto.

A Centralized Scheduler (CS) 918 is either implemented at the base station 902 or at another node (e.g., another node in the RAN or another node in the cellular communications system). Alternatively, the CS 918 is implemented at a WCD 904 such as, e.g., either the WCD 904-1 or the WCD 904-2. In some embodiments, the CS 918 is implemented in software that is executed by processing circuitry of the node to cause the node to perform the functions of the CS 918 described herein.

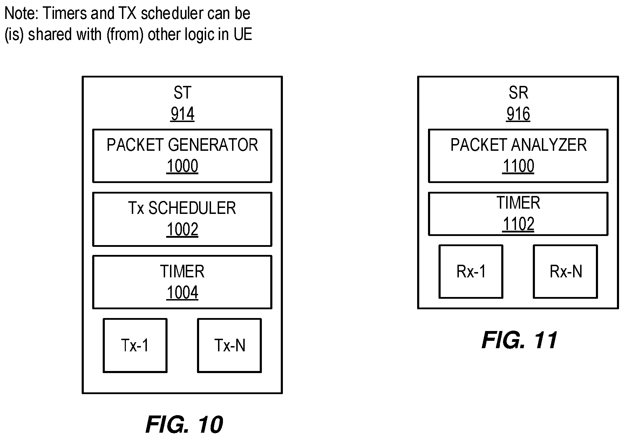

Figure 10 illustrates an ST 914 in more detail, in accordance with one example embodiment of the present disclosure. As illustrated, the ST 914 includes a packet generator 1000, a transmit (Tx) scheduler 1002, and a timer 1004. Figure 11 illustrates an SR 916 in more detail, in accordance with one example embodiment of the present disclosure. As illustrated, the SR 916 includes a packet analyzer 1100 and a timer 1102.

The application functions 906, the communication functions 912, and the CS 918 operate together to determine whether guaranteed service can be enabled via D2D link(s) (i.e., whether particular requirements such as, e.g., reliability requirements can be met via D2D link(s)) between WCDs 904 in a manner that is particularly well-suited for critical traffic having a latency requirement such as, for example, URLLC traffic. Note that some D2D system components (e.g., for authentication, device pairing, etc.) may be located in a core network of the cellular communications system and are not shown for sake of simplicity.

Using the example of Figure 9, the WCDs 904-1 and 904-2 are paired for ascertaining whether reliable D2D communication between the WCDs 904-1 and 904-2 is possible. Considering a data transmission from WCD 904-1 to WCD 904-2, at the transmit end of the D2D link, WCD 904-1 includes the ST 914-1, which includes the packet generator 1000, the Tx scheduler 1002, and the timer 1004. The packet generator 1000 performs header and variable payload generation and time stamping (e.g., 32 bit time stamping with indication for wrap-around). The packet generator 1000 also maintains a statistic of the number of transmitted packets and a respective replication factor. As used herein, "replication" is when the same packet is sent R times, where R is the replication factor. In other words, the replication factor R indicates how many times the same packet is to be transmitted. The Tx scheduler 1002 works in accordance with a resource allocation and Transmission Time Interval (TTI) schedule provided by the CS 918.

On the receive end, at the WCD 904-2, the SR 916-2 includes the packet analyzer 1100 and the timer 1102. The timer 1102 has a shared notion of time with the timer 1004 at the transmit end and the rest of the system 900. The packet analyzer 1100 is configured with the same replication factor as its counterpart packet generator 1000 at the transmit end. The packet analyzer 1100 checks packet transmissions received over the D2D link for data integrity, extracts the time stamp information, and determines the packet transmission latency. The packet analyzer 1100 checks whether a packet is received correctly and within a predefined or preconfigured latency bound (e.g., as required by the application). When the latency bound is not met, it is considered as a violation and captured as a statistic. Furthermore, the packet analyzer 1100 can also maintain a statistic of packets (or replicas) received in error, total packets received, and/or latency variations/jitter of all received packets/replicas.

The configuration setup (e.g., replication factor, periodic/aperiodic transmission, etc.) is done by the CS 918. The statistics collected by the packet analyzer 1100 can be pushed by the WCDs 904 on a programmed periodicity or pulled by the CS 918 on a need basis. Also, on a critical error (e.g., latency requirement is not met or cumulative packet error beyond a required threshold), the respective WCD 904 (e.g., the SR 916 of the respective WCD 904) sends a violation notification to the CS 918, e.g. via normal reliable data transfer. This violation notification can be via Negative Acknowledgement (NACK) in an indirect Hybrid Automatic Repeat Request (HARQ) mechanism, and then details of the statistics can be reported to the CS 918 with statistic report message. Note that, as used herein, an indirect HARQ mechanism is a HARQ mechanism in which the receiving device first sends the Acknowledgement (ACK)/NACK to a node (other than the transmitting device), where this node may then send the ACK/NACK to the transmitting device. In some embodiments, the indirect NACK is delayed such that it is only transmitted when the critical error condition is hit because HARQ retransmissions are not used. An alternative approach would be to add a flag that indicates the violation of reliability requested in the statistic report message instead of sending a NACK. Either of these two approaches can be used to signal a violation.

The Related Application teaches two phases of operation: initial set up phase with synthetic packet transmission and a later running phase with actual application packet data transmission.

Now, turning back to QoS predetermination for the UEs 112 in the candidate, multi-path connection topology in accordance with an embodiment of the present disclosure, the master topology function 114 may incorporate at least some features of the CS 918, and the slave topology functions 116 may interact with (or incorporate) the ST 914 and the SR 916 at the UE 112 to perform link QoS predetermination. The target UE 112-T may also incorporate at least some aspects of the application function 906. If the source wireless node is a source UE 112-S, then the source UE 112-S may also incorporate at least some aspects of the application function 906. Note, however, that the teachings of the Related Application are expanded to provide QoS predetermination for links in the candidate multi-path topology rather than for a single D2D link. However, the teachings of the Related Application provide details of one embodiment of how QoS predetermination can be performed for each of the direct D2D links within the candidate topology. The master topology function 114 can then use the multiple QoS reports received to generate the confirmed topology, as described herein.

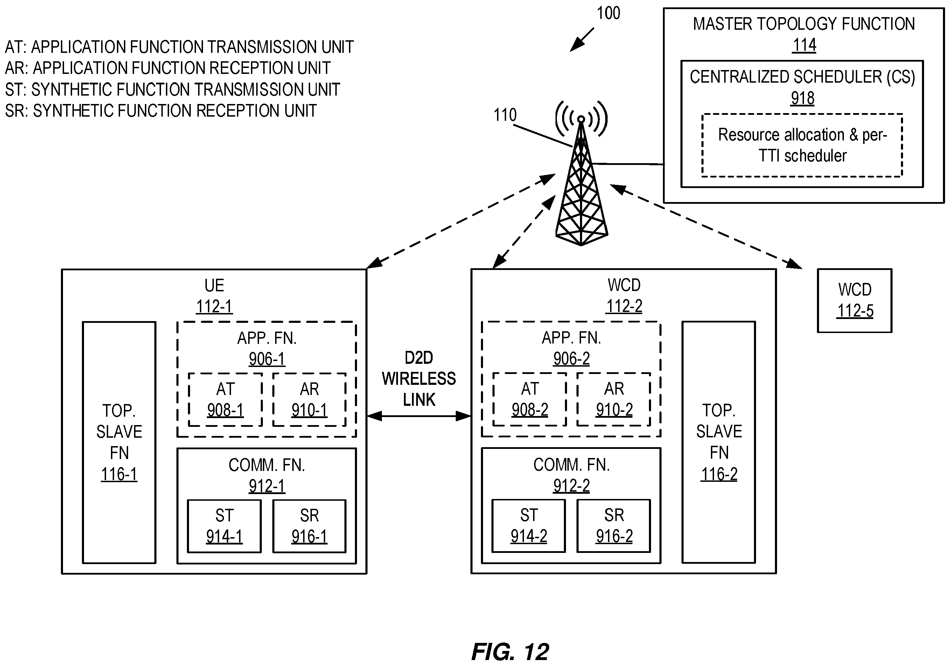

In this regard, Figure 12 illustrates an embodiment of the system 100 of Figure 1 in which the CS 918 is implemented as part of the master topology function 114 and the UEs 112 include respective SRs 914 and STs 916. In one embodiment, the slave topology function 116 performs the configuration setup (e.g., replication factor, periodic/aperiodic transmission, etc.) of the SR 914 and the ST 916 in line with the application-level parameters extracted from the link QoS request message from the master topology function 114. In one embodiment, the slave topology function 116 uses a setup phase taught in the Related Application when it needs to determine the QoS in scenarios where there is no equivalent application packet transmission available. In case there is previous equivalent application packet transmission available, it may derive this information from the run phase taught in the Related Application by monitoring the AR 910. For additional details, the interested reader is directed to the Related Application.

Figure 13 illustrates one example of the QoS predetermination procedure in accordance with an embodiment of the present disclosure. As illustrated, the master topology function 114 sends QoS predetermination requests to UEs 112-A, 112-B, and 112-T in a particular link of the candidate topology (steps 1300-1304). In this example, the node function of UE 112-A is a transmitting node, the node function UE 112-B is a relay node, and the node function of UE 112-T is a receiving node (i.e., the target UE). UE 112-A transmits synthetic packets to UE 112-B (step 1306), and UE 112-B transmits synthetic packets to UE 112-T (step 1308). UE 112-B analyzes the synthetic packets received from UE 112-A, determines the QoS parameter(s) for the link from UE 112-A to UE 112-B based on the analysis, and sends a QoS report including the determined QoS parameter(s) to the master topology function 114 (step 1310). UE 112-T analyzes the synthetic packets received from UE 112-B, determines the QoS parameter(s) for the link from UE 112-B to UE 112-T based on the analysis, and sends a QoS report including the determined QoS parameter(s) to the master topology function 114 (step 1312).

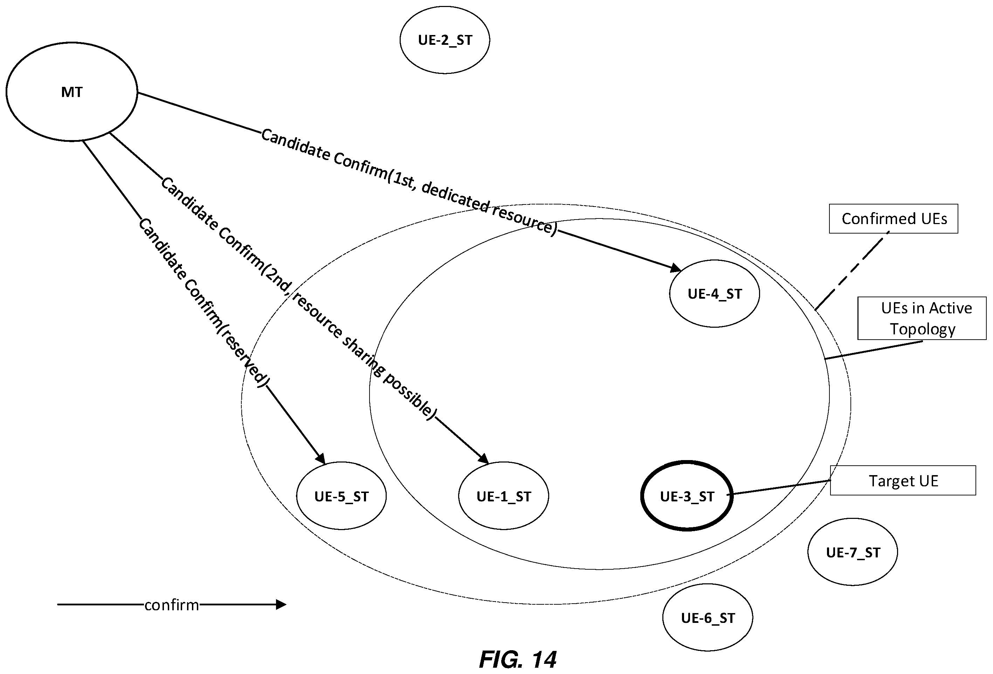

Figure 14 continues the example of Figure 5 but shows the procedure for configuring the UEs 112 that are in the confirmed topology for the multi-path connection. In this example, all of the candidate UEs are used for the candidate topology, and all of the links in the candidate topology are confirmed. So, the confirmed topology is the same as the candidate topology. However, Figure 14 shows another optional aspect of the present disclosure. As illustrated, within the confirmed topology, there may be, in some embodiments, a number of active links provided by respective UEs 112, which are referred to as active UEs for active links in the confirmed topology. In addition, there may be, in some embodiments, a number of inactive, or reserved, links. In the illustrated example, UE-5 is a relay for a reserved link that may be activated if needed or desired (e.g., activated if one of the active links goes down or performance of one of the active links is degraded).

Note that, taking Figure 14 as an example, UE-3 can get the packets from direct path, UE-1 (relay), or UE-4 (relay). So, there are three incoming links, while the example of Figure 13 only shows a simplified case with one relay. Now, each of these relay-based links will result in a QoS predetermination. In one embodiment, link predetermination is not performed for the direct path. Thus, the SR 916 is designed to accommodate this feature, in one embodiment.

Some of the possible alternate embodiments that may not be described above will now be described. In one embodiment, the master topology function 114 resides in the cloud. In one embodiment, the master topology function 114, or at least some functionality of the master topology function 114, is copied to or otherwise implemented at a cluster head UE when a group of UEs are moving out to a non-coverage area and one or more UEs are elected as the cluster head. The cluster head UE is a UE that coordinates and controls the group of UEs. A new cluster of UEs is created, e.g., based on predicted or earlier known poor coverage regions. When created, the master topology function 114, or at least some functionality of the master topology function 114, is copied to or activated at the cluster head UE. Note that the master topology function 114, or at least some functionality of the master topology function 114, can be copied to and run on any node.

In one embodiment, every node in the multi-path connection topology can have a copy of the topology information. In a scenario where the target UE 112-T or a few of the UEs 112 in the topology move to an out-of-coverage region, a cluster head UE could be created to address this cluster of UEs. The creation of the cluster head can be based on predicted or earlier known poor coverage region. Once such a cluster head is created, it obtains or activates a copy of the master topology function 114 and along with it the copy of the topology information for that cluster/group of UEs. Thus, it is possible to act standalone.

In one embodiment, D2D device discovery could be used in addition to ascertain the quality of the radio channel between two UE nodes.

Also, although some of the description above focuses on URLLC applications, the solution described herein can be used for other types of applications such as, e.g., enhanced Mobile Broadband (eMBB) applications as we address the issue of mix of coverage and non-coverage regions where the target UE 112-T could end up being located.

In one embodiment, the mapping or heuristic for mapping the application-level requirement(s) to the needed number of links in the multi-path connection topology can be learned or otherwise obtained from previous allocations, debug information, environment information, etc. and tuned or updated over time. For example, if there are UEs that are located in low coverage regions, it might be better to provide them with additional links than just the direct link from the RAN node 110 irrespective of latency stringency.

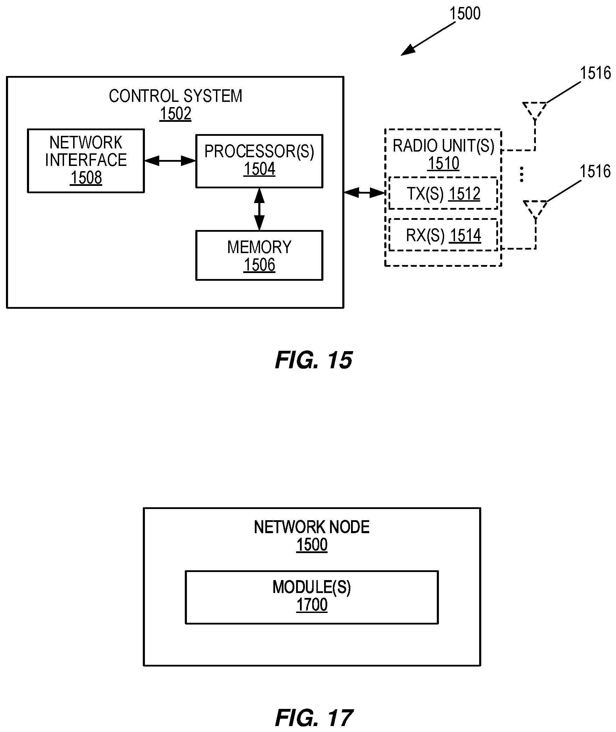

Figure 15 is a schematic block diagram of a network node 1500 according to some embodiments of the present disclosure. Optional features are represented by dashed boxes. The network node 1500 may be, for example, the RAN node 110 or a network node on which the master topology function 114 is implemented. As illustrated, the network node 1500 includes a control system 1502 that includes one or more processors 1504 (e.g., Central Processing Units (CPUs), Application Specific Integrated Circuits (ASICs), Field Programmable Gate Arrays (FPGAs), and/or the like), memory 1506, and a network interface 1508. The one or more processors 1504 are also referred to herein as processing circuitry. In addition, if the network node 1500 is a RAN node, the network node 1500 may also include one or more radio units 1510 that each includes one or more transmitters 1512 and one or more receivers 1514 coupled to one or more antennas 1516. The radio units 1510 may be referred to or be part of radio interface circuitry. In some embodiments, the radio unit(s) 1510 is external to the control system 1502 and connected to the control system 1502 via, e.g., a wired connection (e.g., an optical cable). However, in some other embodiments, the radio unit(s) 1510 and potentially the antenna(s) 1516 are integrated together with the control system 1502. The one or more processors 1504 operate to provide one or more functions of the RAN node 1500 as described herein (e.g., one or more functions of the RAN node 110 or one or more functions of the master topology function 114, as described herein). In some embodiments, the function(s) are implemented in software that is stored, e.g., in the memory 1506 and executed by the one or more processors 1504.

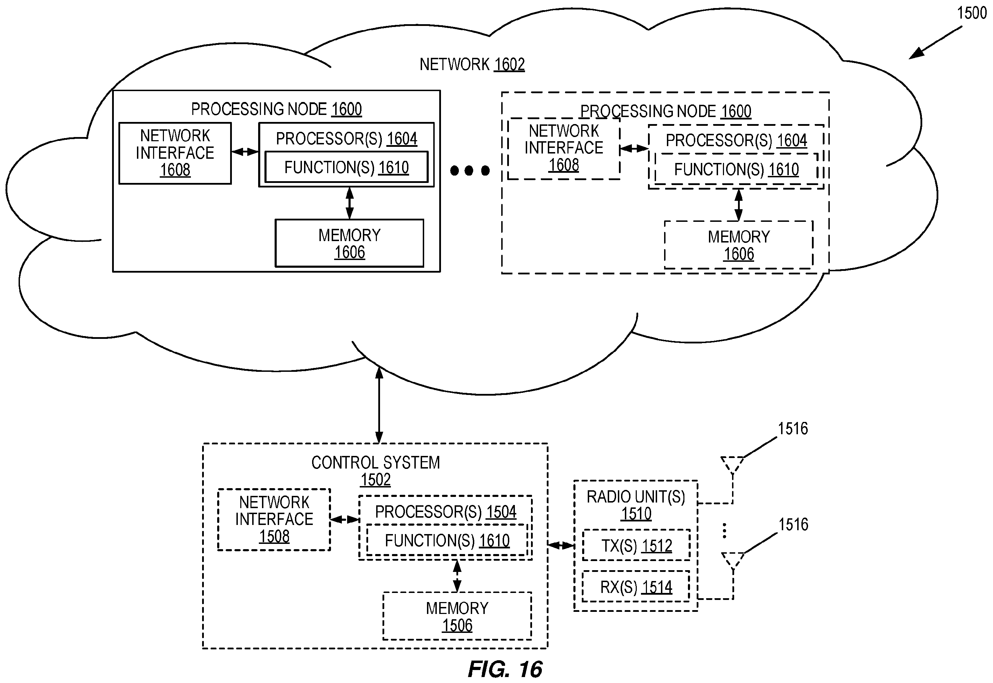

Figure 16 is a schematic block diagram that illustrates a virtualized embodiment of the network node 1500 according to some embodiments of the present disclosure. Again, optional features are represented by dashed boxes. As used herein, a "virtualized" network node is an implementation of the network node 1500 in which at least a portion of the functionality of the network node 1500 is implemented as a virtual component(s) (e.g., via a virtual machine(s) executing on a physical processing node(s) in a network(s)). As illustrated, the network node 1500 includes one or more processing nodes 1600 coupled to or included as part of a network(s) 1602. Each processing node 1600 includes one or more processors 1604 (e.g., CPUs, ASICs, FPGAs, and/or the like), memory 1606, and a network interface 1608. If the network node 1500 is a RAN node, the network node 1500 may include the control system 1502 and/or the one or more radio units 1510, as described above. If present, the control system 1502 or the radio unit(s) are connected to the processing node(s) 1600 via the network 1602.

In this example, functions 1610 of the network node 1500 described herein (e.g., one or more functions of the RAN node 110 or one or more functions of the master topology function 114, as described herein) are implemented at the one or more processing nodes 1600 or distributed across the one or more processing nodes 1600 and the control system 1502 and/or the radio unit(s) 1510 in any desired manner. In some particular embodiments, some or all of the functions 1610 of the network node 1500 described herein are implemented as virtual components executed by one or more virtual machines implemented in a virtual environment(s) hosted by the processing node(s) 1600.

In some embodiments, a computer program including instructions which, when executed by at least one processor, causes the at least one processor to carry out the functionality of the network node 1500 or a node (e.g., a processing node 1600) implementing one or more of the functions 1610 of the network node 1500 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 17 is a schematic block diagram of the network node 1500 according to some other embodiments of the present disclosure. The network node 1500 includes one or more modules 1700, each of which is implemented in software. The module(s) 1700 provide the functionality of the network node 1500 described herein (e.g., one or more functions of the RAN node 110 as described herein). This discussion is equally applicable to the processing node 1600 of Figure 16 where the modules 1700 may be implemented at one of the processing nodes 1600 or distributed across multiple processing nodes 1600 and/or distributed across the processing node(s) 1600 and the control system 1502.

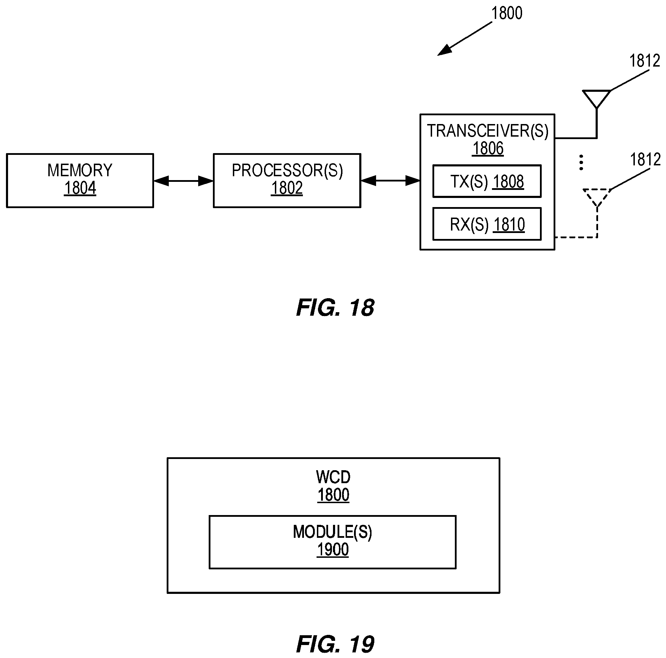

Figure 18 is a schematic block diagram of a wireless communication device 1800 according to some embodiments of the present disclosure. The wireless communication device 1800 is one example of the UE 112. As illustrated, the wireless communication device 1800 includes one or more processors 1802 (e.g., CPUs, ASICs, FPGAs, and/or the like), memory 1804, and one or more transceivers 1806 each including one or more transmitters 1808 and one or more receivers 1810 coupled to one or more antennas 1812. The transceiver(s) 1806 includes radio-front end circuitry connected to the antenna(s) 1812 that is configured to condition signals communicated between the antenna(s) 1812 and the processor(s) 1802, as will be appreciated by one of ordinary skill in the art. The processors 1802 are also referred to herein as processing circuitry. The transceivers 1806 are also referred to herein as radio circuitry. In some embodiments, the functionality of the wireless communication device 1800 described above (e.g., one or more functions of the UE 112 or the slave topology function 116 implemented at the UE 112 as described herein) may be fully or partially implemented in software that is, e.g., stored in the memory 1804 and executed by the processor(s) 1802. Note that the wireless communication device 1800 may include additional components not illustrated in Figure 18 such as, e.g., one or more user interface components (e.g., an input/output interface including a display, buttons, a touch screen, a microphone, a speaker(s), and/or the like and/or any other components for allowing input of information into the wireless communication device 1800 and/or allowing output of information from the wireless communication device 1800), a power supply (e.g., a battery and associated power circuitry), etc.

In some embodiments, a computer program including instructions which, when executed by at least one processor, causes the at least one processor to carry out the functionality of the wireless communication device 1800 according to any of the embodiments described herein (e.g., one or more functions of the UE 112 or the slave topology function 116 implemented at the UE 112 as described herein) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 19 is a schematic block diagram of the wireless communication device 1800 according to some other embodiments of the present disclosure. The wireless communication device 1800 includes one or more modules 1900, each of which is implemented in software. The module(s) 1900 provide the functionality of the wireless communication device 1800 described herein (e.g., one or more functions of the UE 112 or the slave topology function 116 implemented at the UE 112 as described herein).

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While the disclosure has been shown and described with reference to various embodiments thereof, it will be understood by those skilled in the art that various changes in form and details may be made therein without departing from the scope of the disclosure as defined by the appended claims.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • ACK | Acknowledgement |
| • AMF | Access and Mobility Function |
| • AR | Application Function Reception Unit |
| • ASIC | Application Specific Integrated Circuit |
| • AT | Application Function Transmission Unit |
| • AUSF | Authentication Server Function |
| • CoMP | Cooperative Multipoint |
| • CPU | Central Processing Unit |
| • CS | Centralized Scheduler |
| • D2D | Device-to-Device |
| • DSP | Digital Signal Processor |
| • E2E | End-to-End |
| • eMBB | Enhanced Mobile Broadband |
| • eNB | Enhanced or Evolved Node B |
| • FPGA | Field Programmable Gate Array |
| • GHz | Gigahertz |
| • gNB | New Radio Base Station |
| • gNB-DU | New Radio Base Station Distributed Unit |
| • HARQ | Hybrid Automatic Repeat Request |
| • HSS | Home Subscriber Server |
| • IoT | Internet of Things |
| • LoS | Line of Sight |
| • LTE | Long Term Evolution |
| • MEC | Mobile Edge Computing |
| • MME | Mobility Management Entity |
| • mMTC | Massive Machine Type Communication |
| • mmWave | Millimeter Wave |
| • ms | Millisecond |
| • MTC | Machine Type Communication |
| • NACK | Negative Acknowledgement |
| • NEF | Network Exposure Function |
| • NF | Network Function |
| • NR | New Radio |
| • NRF | Network Function Repository Function |
| • NSSF | Network Slice Selection Function |
| • PC | Personal Computer |
| • PCF | Policy Control Function |
| • P-GW | Packet Data Network Gateway |
| • ProSe | Proximity Service |
| • PSR | Packet Success Rate |
| • QoS | Quality of Service |
| • RAM | Random Access Memory |
| • RAN | Radio Access Network |
| • RAT | Radio Access Technology |
| • ROM | Read Only Memory |
| • SCEF | Service Capability Exposure Function |
| • SINR | Signal-to-Interference-Plus-Noise Ratio |
| • SMF | Session Management Function |
| • SR | Synthetic Function Reception Unit |
| • ST | Synthetic Function Transmission Unit |
| • TCI | Transmission Configuration Indicator |
| • TRP | Transmission/Reception Point |
| • TS | Technical Specification |
| • TTI | Transmission Time Interval |
| • Tx | Transmit |
| • UDM | Unified Data Management |
| • UE | User Equipment |
| • UPF | User Plane Function |
| • URLLC | Ultra-Reliable Low-Latency |
| • WCD | Wireless Communication Device |

Those skilled in the art will recognize improvements and modifications to the embodiments of the present disclosure. All such improvements and modifications are considered within the scope of the concepts disclosed herein.

## Claims

1. A method performed by a master topology function (114) to determine a topology for a multi-path connection to a target wireless communication device (112-T), the method comprising:
receiving (300) a request for a topology for a multi-path connection that satisfies one or more application-level requirements of a particular application, the multi-path connection being to a target wireless communication device (112-T);
determining (302) a topology for the multi-path connection based on the one or more application-level requirements of the particular application, wherein:
the topology comprises two or more links from a source wireless node (110; 112-S) to the target wireless communication device (112-T); and
at least one of the two or more links is a multi-hop link from the source wireless node (110; 112-S) to the target wireless communication device (112-T) via one or more additional wireless communication devices (112-R) that operate
as relays; and
configuring (304), directly or indirectly, the source wireless node (110; 112-S), the target wireless communication device (112-T), and the one or more additional wireless communication devices (112-R) in accordance with the determined topology to provide the multi-path connection wherein determining (302) the topology comprises determining (302-2; 408) a number (Nₗᵢₙₖₛ) of links for the multi-path connection based on the one or more application-level requirements of the particular application wherein determining (302) the topology further comprises:
obtaining (302-1) a set of potential candidate wireless communication devices (500) for the topology for the multi-path connection;
performing (302-3) a feasibility check for each potential candidate wireless communication device (112) in the set of potential candidate wireless communication devices (500) to thereby provide a set of candidate wireless communication devices (502), wherein, for each potential candidate wireless communication device (112), the feasibility check is a check of whether the potential candidate wireless communication device (112) satisfies one or more criteria related to the one or more application-level requirements of the particular application; and
determining (302-4 through 302-6) the topology for the multi-path connection based on the set of candidate wireless communication devices (502) and the determined number (Nₗᵢₙₖₛ) of links for the multi-path connection.

2. The method of claim 1 wherein determining (302) the topology comprises determining (302-2; 408) a number (Nₗᵢₙₖₛ) of links for the multi-path connection based on the one or more application-level requirements of the particular application.

3. The method of claim 2 wherein the one or more application-level requirements comprise reliability, and determining (302-2; 408) the number (Nₗᵢₙₖₛ) of links for the multi-path connection comprises determining (302-2; 408) the number (Nₗᵢₙₖₛ) of links for the multi-path connection such that the number of links is directly related to the reliability.

4. The method of claim 1 wherein obtaining (302-1) the set of potential candidate wireless communication devices (500) for the topology for the multi-path connection comprises:
obtaining (404) an initial set of wireless communication devices (112) based on one or more parameters comprising a location of the target wireless communication device (112-T); and
filtering (406) the initial set of wireless communication devices (112) based on one or more filtering criteria to provide the set of potential candidate wireless communication devices (500), the one or more filtering criteria comprising one or more wireless communication device capabilities.

5. The method of claim 1 wherein performing (302-3) the feasibility check for each of the set of potential candidate wireless communication devices (500) comprises:
sending (410) feasibility requests to the set of potential candidate wireless communication devices (500), the feasibility requests being requests for feasibility responses from the set of potential candidate wireless communication devices (500) that indicate whether the set of potential candidate wireless communication devices (500) satisfy the one or more criteria related to the one or more application-level requirements of the particular application;
receiving (412) the feasibility responses from at least a subset of the set of potential candidate wireless communication devices (500); and
selecting (414) the set of candidate wireless communication devices (502) from the set of potential candidate wireless communication devices (500) based on the received feasibility responses.

6. The method of any of claims 1 to 3 wherein the feasibility check for each potential candidate wireless communication device (112) takes into consideration an existing workload at the potential candidate wireless communication device (112).

7. The method of any of claims 1 to 6 wherein determining (302-4 through 302-6) the topology for the multi-path connection based on the set of candidate wireless communication devices (502) and the determined number (Nₗᵢₙₖₛ) of links for the multi-path connection comprises:
determining (302-4) a candidate topology for the multi-path connection based on the set of candidate wireless communication devices (502) and the determined number (Nₗᵢₙₖₛ) of links for the multi-path connection, the candidate topology comprising two or more candidate links, at least one of which is a multi-hop link via at least one of the set of candidate wireless communication devices (502), wherein a number of candidate links in the candidate topology is greater than or equal to the determined number (Nₗᵢₙₖₛ) of links needed for the multi-path connection;
initiating (302-5) a link Quality of Service, QoS, predetermination procedure for each of the two or more candidate links;
receiving (302-5) link QoS reports for each of the two or more candidate links; and
selecting (302-6) the determined number (Nₗᵢₙₖₛ) of links from among the two or more candidate links of the candidate topology as links for the topology for the multi-path connection based on the one or more application-level requirements of the particular application and the link QoS reports.

8. The method of any of claims 1 to 7 wherein the one or more application-level requirements comprise:
a) an application-level QoS for the particular application;
b) an application-level reliability required for the particular application;
c) an application-level latency requirement of the particular application; or
d) any combination to two or more of (a)-(c).

9. A network node (1500) for implementing a master topology function (114) for determining a topology for a multi-path connection to a target wireless communication device (112-T), the network node (1500) comprising:
a network interface (1508; 1608); and
processing circuitry (1504; 1604) associated with the network interface (1508; 1608), the processing circuitry (1504; 1604) configured to cause the network node (1500) to:
receive (300) a request for a topology for a multi-path connection that satisfies one or more application-level requirements of a particular application, the multi-path connection being to a target wireless communication device (112-T);
determine (302) a topology for the multi-path connection based on the one or more application-level requirements of the particular application, wherein:
the topology comprises two or more links from a source wireless node (110; 112-S) to the target wireless communication device (112-T); and
at least one of the two or more links is a multi-hop link from the source wireless node (110; 112-S) to the target wireless communication device (112-T) via one or more additional wireless communication devices (112-R) that operate as relays; and
configure (304) the source wireless node (110; 112-S), the target wireless communication device (112-T), and the one or more additional wireless communication devices (112-R) in accordance with the determined topology to provide the multi-path connection, wherein determining (302) the topology comprises determining (302-2; 408) a number (Nₗᵢₙₖₛ) of links for the multi-path connection based on the one or more application-level requirements of the particular application
wherein determining (302) the topology further comprises:
obtaining (302-1) a set of potential candidate wireless communication devices (500) for the topology for the multi-path connection;
performing (302-3) a feasibility check for each potential candidate wireless communication device (112) in the set of potential candidate wireless communication devices (500) to thereby provide a set of candidate wireless communication devices (502), wherein, for each potential candidate wireless communication device (112), the feasibility check is a check of whether the potential candidate wireless communication device (112) satisfies one or more criteria related to the one or more application-level requirements of the particular application; and
determining (302-4 through 302-6) the topology for the multi-path connection based on the set of candidate wireless communication devices (502) and the determined number (Nₗᵢₙₖₛ) of links for the multi-path connection.

10. The network node (1500) of claim 9 wherein the network node (1500) is further adapted to perform the method of any of claims 2 to 8.

11. A method performed by a wireless communication device (112) to determine and report feasibility of the wireless communication device (112) for serving as a node for a multi-path connection to a target wireless communication device (112-T), the method comprising:
receiving (600) a feasibility request, the feasibility request being a request for a response that indicates whether the wireless communication device (112) is able to serve as a node for a multi-path connection to a target wireless communication device (112-T) that must satisfy one or more application-level requirements of a particular application;
determining (602) whether the wireless communication device (112) is able to serve as a node for the multi-path connection to the target wireless communication device (112-T) that must satisfy the one or more application-level requirements of the particular application; and
sending (606) a feasibility response to the node, the feasibility response comprising information that indicates whether the wireless communication device (112) is able to serve as a node for the multi-path connection to the target wireless communication device (112-T) that must satisfy the one or more application-level requirements of the particular application, in accordance with the determination (602).

12. The method of claim 11 wherein determining (602) whether the wireless communication device (112) is able to serve as a node for the multi-path connection to the target wireless communication device (112-T) comprises determining (602) whether the wireless communication device (112) satisfies one or more criteria that are related to the one or more application-level requirements of the particular application.

13. The method of claim 11 or 12 wherein determining (602) whether the wireless communication device (112) is able to serve as a node for the multi-path connection to the target wireless communication device (112-T) comprises determining (602; 710) whether the wireless communication device (112) is able to serve as a node for the multi-path connection to the target wireless communication device (112-T) taking into consideration a current workload of the wireless communication device (112).

14. The method of any of claims 11 to 13 wherein determining (602) whether the wireless communication device (112) is able to serve as a node for the multi-path connection to the target wireless communication device (112-T) comprises determining (602; 700) whether the wireless communication device (112) has a capability to serve as a relay in a multi-hop link.

15. The method of any of claims 11 to 13 wherein determining (602) whether the wireless communication device (112) is able to serve as a node for the multi-path connection to the target wireless communication device (112-T) comprises determining (602; 700) whether the wireless communication device (112) has a capability to serve as a relay in a multi-hop link for the multi-path connection that must satisfy the one or more application-level requirements of the particular application.

16. The method of any of claims 11 to 13 wherein determining (602) whether the wireless communication device (112) is able to serve as a node for the multi-path connection to the target wireless communication device (112-T) comprises determining (602; 706) whether the wireless communication device (112) has a capability to switch between a receive mode of operation and a transmit mode of operation within a defined amount of time required to satisfy the one or more application-level requirements of the particular application.

17. The method of any of claims 11 to 15 wherein:
the wireless communication device (112) is determined to not be able to serve as a node for the multi-path connection to the target wireless communication device (112-T) that must satisfy the one or more application-level requirements of the particular application; and
the feasibility response further comprises information that indicates a reason that the wireless communication device (112) is determined to not be able to serve as a node for the multi-path connection to the target wireless communication device (112-T) that must satisfy the one or more application-level requirements of the particular application.

18. A wireless communication device (112) for determining and reporting feasibility of the wireless communication device (112) for serving as a node for a multi-path connection to a target wireless communication device (112-T), the wireless communication device (112) comprising:
one or more transmitters (1808);
one or more receivers (1810); and
processing circuitry (1802) associated with the one or more transmitters (1808) and the one or more receivers (1810), the processing circuitry (1802) configured to cause the wireless communication device (112) to:
receive (600) a feasibility request from a node, the feasibility request being a request for a response that indicates whether the wireless communication device (112) is able to serve as a node for a multi-path connection to a target wireless communication device (112-T) that must satisfy one or more application-level requirements of a particular application;
determine (602) whether the wireless communication device (112) is able to serve as a node for the multi-path connection to the target wireless communication device (112-T) that must satisfy the one or more application-level requirements of the particular application; and
send (606) a feasibility response to the node, the feasibility response comprising information that indicates whether the wireless communication device (112) is able to serve as a node for the multi-path connection to the target **wireless** communication device (112-T) that must satisfy the one or more application-level requirements of the particular application, in accordance with the determination (602).

19. The wireless communication device (112) of claim 18 wherein the wireless communication device (112) is further adapted to perform the method of any of claims 11 to 17.

20. A method performed by a wireless communication device (112) for enabling predetermination of a link Quality of Service, QoS, of a multi-hop link that includes at least one wireless communication device (112-R) that operates as a relay node, the method comprising:
• receiving (800) a request for QoS predetermination from a node, the request comprising:
o first information that indicates whether the wireless communication device (112) is a transmitting wireless communication device (112-S) for the multi-hop link, a relay node (112-R) for the multi-hop link, or a target wireless communication device (112-T) for the multi-hop link; and
∘ second information that indicates one or more parameters for the QoS predetermination;
• extracting (802) the first information and the second information from the request; and
• determining (804; 814; 824) whether the wireless communication device (112) is to function as transmitting wireless communication device (112-S) for the multi-hop link, a relay node (112-R) for the multi-hop link, or a target wireless communication device (112-T) for the multi-hop link, based on the first information;
• wherein:
o if the wireless communication device (112) is to function as a relay node (112-R) or a target wireless communication device (112-T) for the multi-hop link, the method further comprises:
▪ receiving and analyzing (806-808; 816-818) a plurality of synthetic packet transmissions from a previous hop in the multi-hop link in accordance with the second information;
▪ obtaining (810; 820) one or more QoS related parameters based on results of the receiving and analyzing the plurality of synthetic packet transmissions; and
▪ sending (812; 822) a QoS report to the node based on the one or more QoS related parameters; and
o if the wireless communication device (112) is to function as a relay node (112-R) or a source wireless communication device (112-S) for the multi-hop link, the method further comprises transmitting (806; 826-828) a plurality of synthetic packet transmissions to a next hop in the multi-hop link in accordance with the second information.

## Patentansprüche

1. Verfahren, das von einer Master-Topologiefunktion (114) durchgeführt wird, um eine Topologie für eine Mehrwegeverbindung zu einer Ziel-Funkkommunikationsvorrichtung (112-T) zu bestimmen, wobei das Verfahren Folgendes umfasst:
Empfangen (300) einer Anfrage nach einer Topologie für eine Mehrwegeverbindung, die eine oder mehrere Anforderungen auf Anwendungsebene einer bestimmten Anwendung erfüllt, wobei die Mehrwegeverbindung zu einer Ziel-Funkkommunikationsvorrichtung (112-T) besteht;
Bestimmen (302) einer Topologie für die Mehrwegeverbindung auf der Grundlage einer oder mehrerer Anforderungen auf Anwendungsebene der jeweiligen Anwendung, wobei:
die Topologie zwei oder mehr Links von einem Quell-Funkknoten (110; 112-S) zur Ziel-Funkkommunikationsvorrichtung (112-T) umfasst; und
mindestens einer der zwei oder mehr Links ein Multi-Hop-Link vom Quell-Funkknoten (110; 112-S) zur Ziel-Funkkommunikationsvorrichtung (112-T) über eine oder mehrere zusätzliche Funkkommunikationsvorrichtungen (112-R) ist, die als Relais fungieren; und
Konfigurieren (304) des Quell-Funkknotens (110; 112-S), der Ziel-Funkkommunikationsvorrichtung (112-T) und einer oder mehrerer zusätzlicher Funkkommunikationsvorrichtungen (112-R) direkt oder indirekt gemäß der bestimmten Topologie, um die Mehrwegeverbindung bereitzustellen, wobei Bestimmen (302) der Topologie Bestimmen (302-2; 408) einer Anzahl (Nₗᵢₙₖₛ) von Links für die Mehrwegeverbindung auf der Grundlage einer oder mehrerer anwendungsbezogener Anforderungen der jeweiligen Anwendung umfasst, wobei Bestimmen (302) der Topologie weiter Folgendes umfasst:
Erhalten (302-1) einer Menge potenzieller Kandidaten für Funkkommunikationsvorrichtungen (500) für die Topologie der Mehrwegeverbindung;
Durchführen (302-3) einer Machbarkeitsprüfung für jeden potenziellen Kandidaten für eine Funkkommunikationsvorrichtung (112) in der Menge der potenziellen Kandidaten für Funkkommunikationsvorrichtungen (500), um dadurch eine Menge von Kandidaten für Funkkommunikationsvorrichtungen (502) zu erhalten, wobei die Machbarkeitsprüfung für jeden potenziellen Kandidaten für eine Funkkommunikationsvorrichtung (112) eine Prüfung ist, ob der potenzielle Kandidat für eine Funkkommunikationsvorrichtung (112) ein oder mehrere Kriterien erfüllt, die in Zusammenhang mit der einen oder den mehreren anwendungsbezogenen Anforderungen der jeweiligen Anwendung stehen; und
Bestimmen (302-4 bis 302-6) der Topologie für die Mehrwegeverbindung auf der Grundlage der Menge der Kandidaten für Funkkommunikationsvorrichtungen (502) und der bestimmten Anzahl (Nₗᵢₙₖₛ) von Links für die Mehrwegeverbindung.

2. Verfahren nach Anspruch 1, wobei Bestimmen (302) der Topologie Bestimmen (302-2; 408) einer Anzahl (Nₗᵢₙₖₛ) von Links für die Mehrwegeverbindung auf der Grundlage einer oder mehrerer Anforderungen auf Anwendungsebene der jeweiligen Anwendung umfasst.

3. Verfahren nach Anspruch 2, wobei eine oder mehrere Anforderungen auf Anwendungsebene Zuverlässigkeit umfassen, und Bestimmen (302-2; 408) der Anzahl (Nₗᵢₙₖₛ) von Links für die Mehrwegeverbindung Bestimmen (302-2; 408) der Anzahl (Nₗᵢₙₖₛ) von Links für die Mehrwegeverbindung so umfasst, dass die Anzahl der Verbindungen in direktem Zusammenhang mit der Zuverlässigkeit steht.

4. Verfahren nach Anspruch 1, wobei Erhalten (302-1) der Menge potenzieller Kandidaten für Funkkommunikationsvorrichtungen (500) für die Topologie der Mehrwegeverbindung Folgendes umfasst:
Erhalten (404) einer Ausgangsmenge von Funkkommunikationsvorrichtungen (112) auf der Grundlage eines oder mehrerer Parameter, umfassend einen Standort der Ziel-Kommunikationsvorrichtung (112-T); und
Filtern (406) der Ausgangsmenge von Funkkommunikationsvorrichtungen (112) auf der Grundlage eines oder mehrerer Filterkriterien, um die Menge potenzieller Kandidaten für Funkkommunikationsvorrichtungen (500) bereitzustellen, wobei das eine oder die mehreren Filterkriterien eine oder mehrere Fähigkeiten einer Funkkommunikationsvorrichtung umfassen.

5. Verfahren nach Anspruch 1, wobei Durchführen (302-3) der Machbarkeitsprüfung für jeden der potenziellen Kandidaten für Funkkommunikationsvorrichtungen (500) Folgendes umfasst:
Senden (410) von Machbarkeitsanfragen an die Menge der potenziellen Kandidaten für Funkkommunikationsvorrichtungen (500), wobei es sich bei den Machbarkeitsanfragen um Anfragen nach Machbarkeitsantworten von der Menge der potenziellen Kandidaten für Funkkommunikationsvorrichtungen (500) handelt, die angeben, ob die Menge der potenziellen Kandidaten für Funkkommunikationsvorrichtungen (500) das eine oder die mehreren Kriterien erfüllt, die in Zusammenhang mit der einen oder den mehreren Anforderungen auf Anwendungsebene der jeweiligen Anwendung stehen;
Empfangen (412) der Machbarkeitsantworten von mindestens einer Teilmenge der Menge potenzieller Kandidaten für Funkkommunikationsvorrichtungen (500); und
Auswählen (414) der Menge der Kandidaten für Funkkommunikationsvorrichtungen (502) aus der Menge der potenziellen Kandidaten für Funkkommunikationsvorrichtungen (500) auf der Grundlage der empfangenen Machbarkeitsantworten.

6. Verfahren nach einem der Ansprüche 1 bis 3, wobei bei der Machbarkeitsprüfung für jeden potenziellen Kandidaten für eine Funkkommunikationsvorrichtung (112) eine bestehende Auslastung des potenziellen Kandidaten für eine Funkkommunikationsvorrichtung (112) berücksichtigt wird.

7. Verfahren nach einem der Ansprüche 1 bis 6, wobei Bestimmen (302-4 bis 302-6) der Topologie für die Mehrwegeverbindung auf der Grundlage der Menge der Kandidaten für Funkkommunikationsvorrichtungen (502) und der bestimmten Anzahl (Nₗᵢₙₖₛ) von Links für die Mehrwegeverbindung Folgendes umfasst:
Bestimmen (302-4) einer Kandidaten-Topologie für die Mehrwegeverbindung auf der Grundlage der Menge der Kandidaten für Funkkommunikationsvorrichtungen (502) und der bestimmten Anzahl (Nₗᵢₙₖₛ) von Links für die Mehrwegeverbindung, wobei die Kandidaten-Topologie zwei oder mehr Kandidaten-Links umfasst, von denen mindestens einer ein Multi-Hop-Link über mindestens einen der Menge der Kandidaten für Funkkommunikationsvorrichtungen (502) ist, wobei eine Anzahl der Kandidaten-Links in der Kandidaten-Topologie größer oder gleich der bestimmten Anzahl (Nₗᵢₙₖₛ) von Links ist, die für die Mehrwegeverbindung benötigt werden;
Einleiten (302-5) eines Verfahrens zur Vorbestimmung der Link-Dienstgüte, QoS, für jeden der zwei oder mehr Kandidaten-Links;
Empfangen (302-5) von Link-QoS-Berichten für jeden der zwei oder mehr Kandidaten-Links; und
Auswählen (302-6) der bestimmten Anzahl (Nₗᵢₙₖₛ) von Links aus den zwei oder mehr Kandidaten-Links der Kandidaten-Topologie als Links für die Topologie für die Mehrwegeverbindung auf der Grundlage einer oder mehrerer Anforderungen auf Anwendungsebene der jeweiligen Anwendung und der Link-QoS-Berichte.

8. Verfahren nach einem der Ansprüche 1 bis 7, wobei die eine oder mehrere Anforderungen auf Anwendungsebene Folgendes umfassen:
a) eine QoS auf Anwendungsebene für die jeweilige Anwendung;
b) eine für die jeweilige Anwendung erforderliche Zuverlässigkeit auf Anwendungsebene;
c) eine Latenzanforderung auf Anwendungsebene der jeweiligen Anwendung; oder
d) eine beliebige Kombination aus zwei oder mehr von (a)-(c).

9. Netzwerkknoten (1500) zur Implementierung einer Master-Topologiefunktion (114) zum Bestimmen einer Topologie für eine Mehrwegeverbindung zu einer Ziel-Funkkommunikationsvorrichtung (112-T), wobei der Netzwerkknoten (1500) Folgendes umfasst:
eine Netzwerkschnittstelle (1508; 1608); und
Verarbeitungsschaltungen (1504; 1604), die der Netzwerkschnittstelle (1508; 1608) zugeordnet sind, wobei die Verarbeitungsschaltungen (1504; 1604) so konfiguriert sind, dass sie den Netzwerkknoten (1500) zu Folgendem veranlassen:
Empfangen (300) einer Anfrage nach einer Topologie für eine Mehrwegeverbindung, die eine oder mehrere Anforderungen auf Anwendungsebene einer bestimmten Anwendung erfüllt, wobei die Mehrwegeverbindung zu einer Ziel-Funkkommunikationsvorrichtung (112-T) besteht;
Bestimmen (302) einer Topologie für die Mehrwegeverbindung auf der Grundlage einer oder mehrerer Anforderungen auf Anwendungsebene der jeweiligen Anwendung, wobei:
die Topologie zwei oder mehr Links von einem Quell-Funkknoten (110; 112-S) zur Ziel-Funkkommunikationsvorrichtung (112-T) umfasst; und
mindestens einer der zwei oder mehr Links ein Multi-Hop-Link vom Quell-Funkknoten (110; 112-S) zur Ziel-Funkkommunikationsvorrichtung (112-T) über eine oder mehrere zusätzliche Funkkommunikationsvorrichtungen (112-R) ist, die als Relais fungieren; und
Konfigurieren (304) des Quell-Funkknotens (110; 112-S), der Ziel-Funkkommunikationsvorrichtung (112-T) und der einen oder mehreren zusätzlichen Funkkommunikationsvorrichtungen (112-R) gemäß der bestimmten Topologie, um die Mehrwegeverbindung bereitzustellen, wobei Bestimmen (302) der Topologie Bestimmen (302-2; 408) einer Anzahl (Nₗᵢₙₖₛ) von Links für die Mehrwegeverbindung auf der Grundlage der anwendungsspezifischen Anforderungen der jeweiligen Anwendung umfasst,
wobei Bestimmen (302) der Topologie weiter Folgendes umfasst:
Erhalten (302-1) einer Menge potenzieller Kandidaten für Funkkommunikationsvorrichtungen (500) für die Topologie der Mehrwegeverbindung;
Durchführen (302-3) einer Machbarkeitsprüfung für jeden potenziellen Kandidaten für eine Funkkommunikationsvorrichtung (112) in der Menge der potenziellen Kandidaten für Funkkommunikationsvorrichtungen (500), um dadurch eine Menge von Kandidaten für Funkkommunikationsvorrichtungen (502) bereitzustellen, wobei die Machbarkeitsprüfung für jeden potenziellen Kandidaten für eine Funkkommunikationsvorrichtung (112) eine Prüfung ist, ob der potenzielle Kandidat für eine Funkkommunikationsvorrichtung (112) ein oder mehrere Kriterien erfüllt, die in Zusammenhang mit der einen oder den mehreren anwendungsbezogenen Anforderungen der jeweiligen Anwendung stehen; und
Bestimmen (302-4 bis 302-6) der Topologie für die Mehrwegeverbindung auf der Grundlage der Menge der Kandidaten für Funkkommunikationsvorrichtungen (502) und der bestimmten Anzahl (Nₗᵢₙₖₛ) von Links für die Mehrwegeverbindung.

10. Netzwerkknoten (1500) nach Anspruch 9, wobei der Netzwerkknoten (1500) weiter angepasst ist, das Verfahren nach einem der Ansprüche 2 bis 8 durchzuführen.

11. Verfahren, das von einer Funkkommunikationsvorrichtung (112) durchgeführt wird, um die Eignung der Funkkommunikationsvorrichtung (112) als Knoten für eine Mehrwegeverbindung zu einer Ziel-Kommunikationsvorrichtung (112-T) zu bestimmen und zu berichten, wobei das Verfahren Folgendes umfasst:
Empfangen (600) einer Machbarkeitsanfrage, wobei es sich bei der Machbarkeitsanfrage um eine Anfrage nach einer Antwort handelt, die angibt, ob die Funkkommunikationsvorrichtung (112) als Knoten für eine Mehrwegeverbindung zu einer Ziel-Funkkommunikationsvorrichtung (112-T) dienen kann, die eine oder mehrere Anforderungen auf Anwendungsebene einer bestimmten Anwendung erfüllen muss;
Bestimmen (602), ob die Funkkommunikationsvorrichtung (112) als Knoten für die Mehrwegeverbindung zur Ziel-Funkkommunikationsvorrichtung (112-T) dienen kann, die die eine oder mehreren anwendungsbezogenen Anforderungen der jeweiligen Anwendung erfüllen muss; und
Senden (606) einer Machbarkeitsantwort an den Knoten, wobei die Machbarkeitsantwort Informationen umfasst, die angeben, ob die Funkkommunikationsvorrichtung (112) als Knoten für die Mehrwegeverbindung zur Ziel-Funkkommunikationsvorrichtung (112-T) dienen kann, die die eine oder mehrere Anforderungen auf Anwendungsebene der jeweiligen Anwendung gemäß der Bestimmung (602) erfüllen muss.

12. Verfahren nach Anspruch 11, wobei Bestimmen (602), ob die Funkkommunikationsvorrichtung (112) als Knoten für die Mehrwegeverbindung zur Ziel-Funkkommunikationsvorrichtung (112-T) dienen kann, Bestimmen (602) umfasst, ob die Funkkommunikationsvorrichtung (112) ein oder mehrere Kriterien erfüllt, die in Zusammenhang mit den Anforderungen auf Anwendungsebene der jeweiligen Anwendung stehen.

13. Verfahren nach Anspruch 11 oder 12, wobei Bestimmen (602), ob die Funkkommunikationsvorrichtung (112) als Knoten für die Mehrwegeverbindung zur Ziel-Funkkommunikationsvorrichtung (112-T) dienen kann, Bestimmen (602; 710) umfasst, ob die Funkkommunikationsvorrichtung (112) unter Berücksichtigung der aktuellen Auslastung der Funkkommunikationsvorrichtung (112) als Knoten für die Mehrwegeverbindung zur Ziel-Funkkommunikationsvorrichtung (112-T) dienen kann.

14. Verfahren nach einem der Ansprüche 11 bis 13, wobei Bestimmen (602), ob die Funkkommunikationsvorrichtung (112) als Knoten für die Mehrwegeverbindung zur Ziel-Funkkommunikationsvorrichtung (112-T) dienen kann, Bestimmen (602; 700) umfasst, ob die Funkkommunikationsvorrichtung (112) die Fähigkeit aufweist, als Relais in einem Multi-Hop-Link zu dienen.

15. Verfahren nach einem der Ansprüche 11 bis 13, wobei Bestimmen (602), ob die Funkkommunikationsvorrichtung (112) als Knoten für die Mehrwegeverbindung zur Ziel-Funkkommunikationsvorrichtung (112-T) dienen kann, Bestimmen (602; 700) umfasst, ob die Funkkommunikationsvorrichtung (112) die Fähigkeit aufweist, als Relais in einem Multi-Hop-Link für die Mehrwegeverbindung zu dienen, die eine oder mehrere Anforderungen auf Anwendungsebene der jeweiligen Anwendung erfüllen muss.

16. Verfahren nach einem der Ansprüche 11 bis 13, wobei Bestimmen (602), ob die Funkkommunikationsvorrichtung (112) als Knoten für die Mehrwegeverbindung zur Ziel-Kommunikationsvorrichtung (112-T) dienen kann, Bestimmen (602; 706) umfasst, ob die Funkkommunikationsvorrichtung (112) die Fähigkeit aufweist, innerhalb einer definierten Zeitspanne, die erforderlich ist, um die eine oder die mehreren Anforderungen auf Anwendungsebene der jeweiligen Anwendung zu erfüllen, zwischen einem Empfangsmodus und einem Übertragungsmodus umzuschalten.

17. Verfahren nach einem der Ansprüche 11 bis 15, wobei:
bestimmt wird, dass die Funkkommunikationsvorrichtung (112) nicht als Knoten für die Mehrwegeverbindung zur Ziel-Kommunikationsvorrichtung (112-T) dienen kann, die die eine oder die mehreren anwendungsbezogenen Anforderungen der jeweiligen Anwendung erfüllen muss; und
die Machbarkeitsantwort weiter Informationen umfasst, die einen Grund angeben, warum die Funkkommunikationsvorrichtung (112) nicht als Knoten für die Mehrwegeverbindung zur Ziel-Funkkommunikationsvorrichtung (112-T) dienen kann, die eine oder mehrere Anforderungen auf Anwendungsebene der jeweiligen Anwendung erfüllen muss.

18. Funkkommunikationsvorrichtung (112) zum Bestimmen und Berichten der Eignung der Funkkommunikationsvorrichtung (112) als Knoten für eine Mehrwegeverbindung zu einer Ziel-Kommunikationsvorrichtung (112-T), wobei die Funkkommunikationsvorrichtung (112) Folgendes umfasst:
eines oder mehrere Übertragungsgeräte (1808);
einen oder mehrere Empfänger (1810); und
eine Verarbeitungsschaltung (1802), die einem oder mehreren Übertragungsgeräten (1808) und einem oder mehreren Empfängern (1810) zugeordnet ist, wobei die Verarbeitungsschaltung (1802) so konfiguriert ist, dass sie die Funkkommunikationsvorrichtung (112) veranlasst zum:
Empfangen (600) einer Machbarkeitsanfrage von einem Knoten, wobei die Machbarkeitsanfrage eine Anfrage nach einer Antwort ist, die angibt, ob die Funkkommunikationsvorrichtung (112) als Knoten für eine Mehrwegeverbindung zu einer Ziel-Funkkommunikationsvorrichtung (112-T) dienen kann, die eine oder mehrere Anforderungen auf Anwendungsebene einer bestimmten Anwendung erfüllen muss;
Bestimmen (602), ob die Funkkommunikationsvorrichtung (112) als Knoten für die Mehrwegeverbindung zur Ziel-Funkkommunikationsvorrichtung (112-T) dienen kann, die die eine oder die mehreren anwendungsbezogenen Anforderungen der jeweiligen Anwendung erfüllen muss; und
Senden (606) einer Machbarkeitsantwort an den Knoten, wobei die Machbarkeitsantwort Informationen umfasst, die angeben, ob die Funkkommunikationsvorrichtung (112) in der Lage ist, als Knoten für die Mehrwegeverbindung zur Ziel-Funkkommunikationsvorrichtung (112-T) zu dienen, die die eine oder mehrere Anforderungen auf Anwendungsebene der jeweiligen Anwendung gemäß der Bestimmung (602) erfüllen muss.

19. Funkkommunikationsvorrichtung (112) nach Anspruch 18, wobei die Funkkommunikationsvorrichtung (112) weiter angepasst ist, das Verfahren nach einem der Ansprüche 11 bis 17 durchzuführen.

20. Verfahren, das von einer Funkkommunikationsvorrichtung (112) durchgeführt wird, um die Link-Dienstgüte, QoS, eines Multi-Hop-Links vorab zu bestimmen, der mindestens ein Funkkommunikationsvorrichtung (112-R) einschließt, die als Relaisknoten fungiert, wobei das Verfahren Folgendes umfasst:
- Empfangen (800) einer Anfrage zur QoS-Vorbestimmung von einem Knoten, wobei die Anfrage Folgendes umfasst:
- erste Informationen, die angeben, ob es sich bei der Funkkommunikationsvorrichtung (112) um eine übertragende Funkkommunikationsvorrichtung (112-S) für den Multi-Hop-Link, einen Relaisknoten (112-R) für den Multi-Hop-Link oder eine Ziel-Kommunikationsvorrichtung (112-T) für den Multi-Hop-Link handelt; und
- zweite Informationen, die einen oder mehrere Parameter für die QoS-Vorbestimmung angeben;
- Extrahieren (802) der ersten und der zweiten Informationen aus der Anfrage; und
- Bestimmen (804; 814; 824), auf Grundlage der ersten Informationen, ob die Funkkommunikationsvorrichtung (112) als übertragende Funkkommunikationsvorrichtung (112-S) für den Multi-Hop-Link, als Relaisknoten (112-R) für den Multi-Hop-Link oder als Ziel-Kommunikationsvorrichtung (112-T) für den Multi-Hop-Link fungieren soll;
- wobei:
- falls die Funkkommunikationsvorrichtung (112) als ein Relaisknoten (112-R) oder eine Ziel-Funkkommunikationsvorrichtung (112-T) für den Multi-Hop-Link fungieren soll, das Verfahren weiter Folgendes umfasst:
- Empfangen und Analysieren (806-808; 816-818) einer Vielzahl synthetischer Paketübertragungen von einem vorherigen Hop in dem Multi-Hop-Link gemäß den zweiten Informationen;
- Erhalten (810; 820) eines oder mehrerer QoS-bezogener Parameter auf der Grundlage der Ergebnisse des Empfangs und der Analyse der Vielzahl synthetischer Paketübertragungen; und
- Senden (812; 822) eines QoS-Berichts an den Knoten auf der Grundlage eines oder mehrerer QoS-bezogener Parameter; und
- falls die Funkkommunikationsvorrichtung (112) als Relaisknoten (112-R) oder als Quell-Funkkommunikationsvorrichtung (112-S) für den Multi-Hop-Link fungieren soll, das Verfahren weiter Übertragen (806; 826-828) einer Vielzahl synthetischer Paketübertragungen an einen nächsten Hop in dem Multi-Hop-Link gemäß den zweiten Informationen umfasst.

## Revendications

1. Procédé réalisé par une fonction de topologie maître (114) pour déterminer une topologie pour une connexion multi-chemins vers un dispositif de communication sans fil cible (112-T), le procédé comprenant :
la réception (300) d'une demande de topologie pour une connexion multi-chemins qui satisfait à une ou plusieurs exigences au niveau de l'application d'une application particulière, la connexion multi-chemins étant établie vers un dispositif de communication sans fil cible (112-T) ;
la détermination (302) d'une topologie pour la connexion multi-chemins en fonction des une ou plusieurs exigences au niveau de l'application de l'application particulière, dans lequel :
la topologie comprend deux liaisons ou plus entre un nœud sans fil source (110 ; 112-S) et le dispositif de communication sans fil cible (112-T) ; et
au moins l'une des deux liaisons ou plus est une liaison multi-sauts entre le nœud sans fil source (110 ; 112-S) et le dispositif de communication sans fil cible (112-T) via un ou plusieurs dispositifs de communication sans fil supplémentaires (112-R) qui fonctionnent comme relais ; et
la configuration (304), directe ou indirecte, du nœud sans fil source (110 ; 112-S), du dispositif de communication sans fil cible (112-T) et des un ou plusieurs dispositifs de communication sans fil supplémentaires (112-R) conformément à la topologie déterminée afin de fournir la connexion multi-chemins, dans lequel la détermination (302) de la topologie comprenant la détermination (302-2 ; 408) d'un nombre (Nₗᵢₐᵢₛₒₙₛ) de liaisons pour la connexion multi-chemins en fonction des une ou plusieurs exigences au niveau de l'application de l'application particulière, dans lequel la détermination (302) de la topologie comprend en outre :
l'obtention (302-1) d'un ensemble de dispositifs de communication sans fil candidats potentiels (500) pour la topologie de la connexion multi-chemins ;
la réalisation (302-3) d'une vérification de faisabilité pour chaque dispositif de communication sans fil candidat potentiel (112) dans l'ensemble de dispositifs de communication sans fil candidats potentiels (500) afin de fournir un ensemble de dispositifs de communication sans fil candidats (502), dans lequel, pour chaque dispositif de communication sans fil candidat potentiel (112), la vérification de faisabilité consiste à vérifier si le dispositif de communication sans fil candidat potentiel (112) satisfait à un ou plusieurs critères liés à une ou plusieurs exigences au niveau de l'application de l'application particulière ; et
la détermination (302-4 à 302-6) de la topologie pour la connexion multi-chemins en fonction de l'ensemble des dispositifs de communication sans fil candidats (502) et du nombre déterminé (Nₗᵢₐᵢₛₒₙₛ) de liaisons pour la connexion multi-chemins.

2. Procédé selon la revendication 1, dans lequel la détermination (302) de la topologie comprend la détermination (302-2 ; 408) d'un nombre (Nₗᵢₐᵢₛₒₙₛ) de liaisons pour la connexion multi-chemins en fonction des une ou plusieurs exigences au niveau de l'application de l'application particulière.

3. Procédé selon la revendication 2, dans lequel les une ou plusieurs exigences au niveau de l'application comprennent la fiabilité, et la détermination (302-2 ; 408) du nombre (Nₗᵢₐᵢₛₒₙₛ) de liaisons pour la connexion multi-chemins comprend la détermination (302-2 ; 408) du nombre (Nₗᵢₐᵢₛₒₙₛ) de liaisons pour la connexion multi-chemins de sorte que le nombre de liaisons soit directement lié à la fiabilité.

4. Procédé selon la revendication 1, dans lequel l'obtention (302-1) de l'ensemble des dispositifs de communication sans fil candidats potentiels (500) pour la topologie de la connexion multi-chemins comprend :
l'obtention (404) d'un ensemble initial de dispositifs de communication sans fil (112) en fonction d'un ou plusieurs paramètres comprenant un emplacement du dispositif de communication sans fil cible (112-T) ; et
le filtrage (406) de l'ensemble initial de dispositifs de communication sans fil (112) en fonction d'un ou plusieurs critères de filtrage pour fournir l'ensemble de dispositifs de communication sans fil candidats potentiels (500), les un ou plusieurs critères de filtrage comprenant une ou plusieurs capacités de dispositif de communication sans fil.

5. Procédé selon la revendication 1, dans lequel la réalisation (302-3) de la vérification de faisabilité pour chacun parmi l'ensemble de dispositifs de communication sans fil candidats potentiels (500) comprend :
l'envoi (410) de demandes de faisabilité à l'ensemble des dispositifs de communication sans fil candidats potentiels (500), les demandes de faisabilité étant des demandes de réponses de faisabilité de l'ensemble de dispositifs de communication sans fil candidats potentiels (500) qui indiquent si l'ensemble de dispositifs de communication sans fil candidats potentiels (500) satisfait à aux un ou plusieurs critères liés aux une ou plusieurs exigences au niveau de l'application de l'application particulière ;
la réception (412) des réponses de faisabilité d'au moins un sous-ensemble de l'ensemble de dispositifs de communication sans fil candidats potentiels (500) ; et
la sélection (414) de l'ensemble de dispositifs de communication sans fil candidats (502) à partir de l'ensemble de dispositifs de communication sans fil candidats potentiels (500) en fonction des réponses de faisabilité reçues.

6. Procédé selon l'une quelconque des revendications 1 à 3, dans lequel la vérification de faisabilité pour chaque dispositif de communication sans fil candidat potentiel (112) tient compte d'une charge de travail existante au niveau du dispositif de communication sans fil candidat potentiel (112).

7. Procédé selon l'une quelconque des revendications 1 à 6, dans lequel la détermination (302-4 à 302-6) de la topologie pour la connexion multi-chemins en fonction de l'ensemble des dispositifs de communication sans fil candidats (502) et du nombre déterminé (Nₗᵢₐᵢₛₒₙₛ) de liaisons pour la connexion multi-chemins comprend :
la détermination (302-4) d'une topologie candidate pour la connexion multi-chemins en fonction de l'ensemble de dispositifs de communication sans fil candidats (502) et du nombre déterminé (Nₗᵢₐᵢₛₒₙₛ) de liaisons pour la connexion multi-chemins, la topologie candidate comprenant deux liaisons candidates ou plus, dont au moins une est une liaison multi-sauts via au moins l'un parmi l'ensemble de dispositifs de communication sans fil candidats (502), dans lequel un nombre de liaisons candidates dans la topologie candidate est supérieur ou égal au nombre déterminé (Nₗᵢₐᵢₛₒₙₛ) de liaisons nécessaires pour la connexion multi-chemins ;
le lancement (302-5) d'une procédure de prédétermination de la qualité de service, QoS, de liaison pour chacune des deux liaisons candidates ou plus ;
la réception (302-5) de rapports de QoS de liaison pour chacune des deux liaisons candidates ou plus ; et
la sélection (302-6) du nombre déterminé (Nₗᵢₐᵢₛₒₙₛ) de liaisons parmi les deux liaisons candidates ou plus de la topologie candidate comme liaisons pour la topologie de la connexion multi-chemins en fonction des une ou plusieurs exigences au niveau de l'application de l'application particulière et des rapports de QoS de liaison.

8. Procédé selon l'une quelconque des revendications 1 à 7, dans lequel les une ou plusieurs exigences au niveau de l'application comprennent :
a) une QoS au niveau de l'application pour l'application particulière ;
b) une fiabilité au niveau de l'application requise pour l'application particulière ;
c) une exigence de latence au niveau de l'application de l'application particulière ; ou
d) toute combinaison de deux des points (a) à (c), ou plus.

9. Nœud de réseau (1500) destiné à implémenter une fonction de topologie maître (114) pour déterminer une topologie pour une connexion multi-chemins vers un dispositif de communication sans fil cible (112-T), le nœud de réseau (1500) comprenant :
une interface réseau (1508 ; 1608) ; et
des circuits de traitement (1504 ; 1604) associés à l'interface réseau (1508 ; 1608), les circuits de traitement (1504 ; 1604) configurés pour amener le nœud de réseau (1500) à :
recevoir (300) une demande de topologie pour une connexion multi-chemins qui satisfait à une ou plusieurs exigences au niveau de l'application d'une application particulière, la connexion multi-chemins étant établie vers un dispositif de communication sans fil cible (112-T) ;
déterminer (302) une topologie pour la connexion multi-chemins en fonction des une ou plusieurs exigences au niveau de l'application de l'application particulière, dans lequel :
la topologie comprend deux liaisons ou plus entre un nœud sans fil source (110 ; 112-S) et le dispositif de communication sans fil cible (112-T) ; et
au moins l'une parmi les deux liaisons ou plus est une liaison multi-sauts entre le nœud sans fil source (110 ; 112-S) et le dispositif de communication sans fil cible (112-T) via un ou plusieurs dispositifs de communication sans fil supplémentaires (112-R) qui fonctionnent comme relais ; et
configurer (304) le nœud sans fil source (110 ; 112-S), le dispositif de communication sans fil cible (112-T) et les un ou plusieurs dispositifs de communication sans fil supplémentaires (112-R) conformément à la topologie déterminée afin de fournir la connexion multi-chemins, dans lequel la détermination (302) de la topologie comprend la détermination (302-2 ; 408) d'un nombre (Nₗᵢₐᵢₛₒₙₛ) de liaisons pour la connexion multi-chemins en fonction des une ou plusieurs exigences au niveau de l'application de l'application particulière,
dans lequel la détermination (302) de la topologie comprend en outre :
l'obtention (302-1) d'un ensemble de dispositifs de communication sans fil candidats potentiels (500) pour la topologie de la connexion multi-chemins ;
la réalisation (302-3) d'une vérification de faisabilité pour chaque dispositif de communication sans fil candidat potentiel (112) dans l'ensemble de dispositifs de communication sans fil candidats potentiels (500) afin de fournir un ensemble de dispositifs de communication sans fil candidats (502), dans lequel, pour chaque dispositif de communication sans fil candidat potentiel (112), la vérification de faisabilité consiste à vérifier si le dispositif de communication sans fil candidat potentiel (112) satisfait à un ou plusieurs critères liés aux une ou plusieurs exigences au niveau de l'application de l'application particulière ; et
la détermination (302-4 à 302-6) de la topologie pour la connexion multi-chemins en fonction de l'ensemble de dispositifs de communication sans fil candidats (502) et du nombre déterminé (Nₗᵢₐᵢₛₒₙₛ) de liaisons pour la connexion multi-chemins.

10. Nœud de réseau (1500) selon la revendication 9, dans lequel le nœud de réseau (1500) est conçu en outre pour réaliser le procédé selon l'une quelconque des revendications 2 à 8.

11. Procédé réalisé par un dispositif de communication sans fil (112) pour déterminer et signaler la faisabilité du dispositif de communication sans fil (112) pour servir de nœud à une connexion multi-chemins vers un dispositif de communication sans fil cible (112-T), le procédé comprenant :
la réception (600) d'une demande de faisabilité, la demande de faisabilité étant une demande de réponse indiquant si le dispositif de communication sans fil (112) est apte à servir de nœud à une connexion multi-chemins vers un dispositif de communication sans fil cible (112-T) qui doit satisfaire à une ou plusieurs exigences au niveau de l'application d'une application particulière ;
la détermination (602) permettant de savoir si le dispositif de communication sans fil (112) est apte à servir de nœud à la connexion multi-chemins vers le dispositif de communication sans fil cible (112-T) qui doit satisfaire aux une ou plusieurs exigences au niveau de l'application de l'application particulière ; et
l'envoi (606) d'une réponse de faisabilité au nœud, la réponse de faisabilité comprenant des informations indiquant si le dispositif de communication sans fil (112) est apte à servir de nœud à la connexion multi-chemins vers le dispositif de communication sans fil cible (112-T) qui doit satisfaire aux une ou plusieurs exigences au niveau de l'application de l'application particulière, conformément à la détermination (602).

12. Procédé selon la revendication 11, dans lequel la détermination (602) permettant de savoir si le dispositif de communication sans fil (112) est apte à servir de nœud à la connexion multi-chemins vers le dispositif de communication sans fil cible (112-T) comprend la détermination (602) permettant de savoir si le dispositif de communication sans fil (112) satisfait à un ou plusieurs critères liés aux une ou plusieurs exigences au niveau de l'application de l'application particulière.

13. Procédé selon la revendication 11 ou 12, dans lequel la détermination (602) permettant de savoir si le dispositif de communication sans fil (112) est apte à servir de nœud à la connexion multi-chemins vers le dispositif de communication sans fil cible (112-T) comprend la détermination (602 ; 710) permettant de savoir si le dispositif de communication sans fil (112) est apte à servir de nœud à la connexion multi-chemins vers le dispositif de communication sans fil cible (112-T) en tenant compte de la charge de travail actuelle du dispositif de communication sans fil (112).

14. Procédé selon l'une quelconque des revendications 11 à 13, dans lequel la détermination (602) permettant de savoir si le dispositif de communication sans fil (112) est apte à servir de nœud à la connexion multi-chemins vers le dispositif de communication sans fil cible (112-T) comprend la détermination (602; 700) permettant de savoir si le dispositif de communication sans fil (112) a la capacité de servir de relais dans une liaison multi-sauts.

15. Procédé selon l'une quelconque des revendications 11 à 13, dans lequel la détermination (602) permettant de savoir si le dispositif de communication sans fil (112) est apte à servir de nœud à la connexion multi-chemins vers le dispositif de communication sans fil cible (112-T) comprend la détermination (602; 700) permettant de savoir si le dispositif de communication sans fil (112) a la capacité de servir de relais dans une liaison multi-sauts pour la connexion multi-chemins qui doit satisfaire aux une ou plusieurs exigences au niveau de l'application de l'application particulière.

16. Procédé selon l'une quelconque des revendications 11 à 13, dans lequel la détermination (602) permettant de savoir si le dispositif de communication sans fil (112) est apte à servir de nœud à la connexion multi-chemins vers le dispositif de communication sans fil cible (112-T) comprend la détermination (602; 706) permettant de savoir si le dispositif de communication sans fil (112) a la capacité de basculer entre un mode de fonctionnement de réception et un mode de fonctionnement de transmission dans un délai défini requis pour satisfaire aux une ou plusieurs exigences au niveau de l'application de l'application particulière.

17. Procédé selon l'une quelconque des revendications 11 à 15, dans lequel :
il est déterminé que le dispositif de communication sans fil (112) ne peut pas servir de nœud à la connexion multi-chemins vers le dispositif de communication sans fil cible (112¬T) qui doit satisfaire aux une ou plusieurs exigences au niveau de l'application de l'application particulière ; et
la réponse de faisabilité comprend en outre des informations qui indiquent une raison pour laquelle il a été déterminé que le dispositif de communication sans fil (112) ne peut pas servir de nœud à la connexion multi-chemins vers le dispositif de communication sans fil cible (112-T) qui doit satisfaire aux une ou plusieurs exigences au niveau de l'application de l'application particulière.

18. Dispositif de communication sans fil (112) pour déterminer et signaler la faisabilité du dispositif de communication sans fil (112) de servir de nœud à une connexion multi-chemins vers un dispositif de communication sans fil cible (112-T), le dispositif de communication sans fil (112) comprenant :
un ou plusieurs émetteurs (1808) ;
un ou plusieurs récepteurs (1810) ; et
des circuits de traitement (1802) associés aux un ou plusieurs émetteurs (1808) et aux un ou plusieurs récepteurs (1810), les circuits de traitement (1802) étant configurés pour amener le dispositif de communication sans fil (112) à :
recevoir (600) une demande de faisabilité d'un nœud, la demande de faisabilité étant une demande de réponse indiquant si le dispositif de communication sans fil (112) est apte à servir de nœud à une connexion multi-chemins vers un dispositif de communication sans fil cible (112-T) qui doit satisfaire aux une ou plusieurs exigences au niveau de l'application d'une application particulière ;
déterminer (602) si le dispositif de communication sans fil (112) est apte à servir de nœud à la connexion multi-chemins vers le dispositif de communication sans fil cible (112-T) qui doit satisfaire aux une ou plusieurs exigences au niveau de l'application de l'application particulière ; et
envoyer (606) une réponse de faisabilité au nœud, la réponse de faisabilité comprenant des informations indiquant si le dispositif de communication sans fil (112) est apte à servir de nœud à la connexion multi-chemins au dispositif de communication sans fil cible (112-T) qui doit satisfaire aux une ou plusieurs exigences au niveau de l'application de l'application particulière, conformément à la détermination (602).

19. Dispositif de communication sans fil (112) selon la revendication 18, dans lequel le dispositif de communication sans fil (112) est conçu en outre pour réaliser le procédé selon l'une quelconque des revendications 11 à 17.

20. Procédé réalisé par un dispositif de communication sans fil (112) pour permettre la prédétermination de la qualité de service, QoS, de liaison d'une liaison multi-sauts qui inclut au moins un dispositif de communication sans fil (112-R) qui fonctionne comme nœud relais, le procédé comprenant :
- la réception (800) d'une demande de prédétermination de QoS d'un nœud, la demande comprenant :
- une première information indiquant si le dispositif de communication sans fil (112) est un dispositif de communication sans fil de transmission (112-S) pour la liaison multi-sauts, un nœud relais (112-R) pour la liaison multi-sauts ou un dispositif de communication sans fil cible (112-T) pour la liaison multi-sauts ; et
- une seconde information indiquant un ou plusieurs paramètres pour la prédétermination de QoS ;
- l'extraction (802) de la première information et de la seconde information de la demande ; et
- la détermination (804 ; 814 ; 824) permettant de savoir si le dispositif de communication sans fil (112) doit fonctionner comme dispositif de communication sans fil de transmission (112-S) pour la liaison multi-sauts, comme nœud relais (112-R) pour la liaison multi-sauts ou comme dispositif de communication sans fil cible (112-T) pour la liaison multi-sauts en fonction de la première information ;
- dans lequel :
- si le dispositif de communication sans fil (112) doit fonctionner comme nœud relais (112-R) ou comme dispositif de communication sans fil cible (112-T) pour la liaison multi-sauts, le procédé comprend en outre :
- la réception et l'analyse (806-808 ; 816-818) d'une pluralité de transmissions de paquets synthétiques provenant d'un saut précédent dans la liaison multi-sauts conformément à la seconde information ;
- l'obtention (810 ; 820) d'un ou plusieurs paramètres liés à la QoS en fonction des résultats de la réception et de l'analyse de la pluralité de transmissions de paquets synthétiques ; et
- l'envoi (812; 822) d'un rapport de QoS au nœud en fonction des un ou plusieurs paramètres liés à la QoS ; et
- si le dispositif de communication sans fil (112) doit fonctionner comme nœud relais (112-R) ou dispositif de communication sans fil source (112-S) pour la liaison multi-sauts, le procédé comprend en outre la transmission (806 ; 826-828) d'une pluralité de transmissions de paquets synthétiques à un saut suivant dans la liaison multi-sauts conformément à la seconde information.
